# EUROPEAN PATENT APPLICATION

(11) **EP 4 844 811 A1**
(43) Date of publication of application: **25.11.2026**
(21) Application number: 25748172.1
(22) Date of filing: 28.01.2025
(51) Int. Cl.: H01M 4/02, H01M 4/04, H01M 4/36, H01M 4/131, H01M 4/505, H01M 4/525, H01M 10/052, H01M 10/0562

(54) **ELECTRODE COMPOSITE, BATTERY, AND METHOD FOR MANUFACTURING SAME**

(30) Priority: 30.01.2024 JP 2024012253
(71) Applicant: Canon Kabushiki Kaisha, Tokyo 146-8501 (JP)
(72) Inventor: KUBO, Kenta, Tokyo 146-8501 (JP); TANIUCHI, Hiroshi, Tokyo 146-8501 (JP); USAMI, Hirokazu, Tokyo 146-8501 (JP); NAKAZAWA, Ikuo, Tokyo 146-8501 (JP); MASADA, Yohei, Tokyo 146-8501 (JP); AOTANI, Takaharu, Tokyo 146-8501 (JP)
(74) Representative: WESER & Kollegen Patentanwälte PartmbB
(86) International application number: PCT/JP2025/002525
(87) International publication number: WO 2025/164590

(57) **Abstract**

The present disclosure provides: an electrode composite which is a laminate of a positive electrode layer and a solid electrolyte layer, has good contact between electrode active material particles and solid electrolyte particles, is not susceptible to the occurrence of a short circuit, and can achieve good battery output power; a secondary battery which uses the electrode composite, has a high output power, and is capable of reducing the risk of a short circuit; and a method for manufacturing the same. An electrode composite to be applied to a secondary battery, the electrode composite comprising: a positive electrode active material layer and an electrolyte layer, wherein the positive electrode active material layer has a first surface which is in contact with the electrolyte layer and a second surface which is located on an opposite side to the first surface and comprises a plurality of first active material particles and a plurality of second active material particles which have a higher average aspect ratio than the plurality of first active material particles, and a center of gravity position of the plurality of second active material particles is located on a farther side from the first surface than a center of gravity position of the plurality of first active material particles.

## Description

### TECHNICAL FIELD

The present disclosure relates to an electrode composite and a battery for a secondary battery, and a method for manufacturing the same.

### BACKGROUND ART

Typically, secondary batteries comprise electrodes (positive and negative electrodes) and an electrolyte and perform charging and discharging when ions move between the electrodes with the electrolyte therebetween. Such secondary batteries are used in a wide range of applications from small equipment such as mobile phones to large equipment such as electric vehicles. For this reason, further improvements in the performance of the secondary batteries are required.

In recent years, research and development of so-called all-solid-state batteries using an inorganic solid electrolyte as the electrolyte has advanced. All-solid-state batteries are expected to achieve improved safety as well as high capacity and output by replacing the conventional organic electrolyte with a solid electrolyte.

On the other hand, in all-solid-state batteries, it is difficult to form a favorable interface between an electrode active material particle and a solid electrolyte particle. With conventional secondary batteries using electrolytic solutions, a favorable interface can be formed with relative ease as the electrolytic solution that penetrates into the electrodes can coat the electrode active material particle. Consequently, increasing a surface area by, for example, reducing a particle size of the electrode active material particle increases a contact interface, thereby enabling higher power output (PTL 1).

On the other hand, in all-solid-state batteries, while contact occurs between the electrode active material particle and the solid electrolyte particle, limited contact thereof makes it difficult to form a favorable interface. This issue is particularly likely to occur in oxide-based all-solid-state batteries that use oxide-based solid electrolytes. This is because, unlike sulfide-based solid electrolytes, oxide-based solid electrolytes lack plasticity and are more prone to a further decrease in interparticle contact. Therefore, all-solid-state batteries, particularly those that are oxide-based, tend to have high battery resistance and producing high power output is difficult to obtain.

In consideration thereof, to improve contact, techniques are known including sintering using mechanical pressure and pulsed electrical heating and providing projected portions on surfaces of the electrode active material particles.

PTL 2 discloses a manufacturing method involving laminating a solid electrolyte layer and a positive electrode active material layer and fabricating a laminate by performing spark plasma sintering (SPS) for 5 minutes at 800°C to obtain an all-individual battery capable of operating in a favorable manner.

PTL 3 discloses electrode an active material particle having projected portions that precipitate in a plurality of directions on an outer side of a shell portion of particulate lithium cobalt oxide (LCO), which is a positive electrode active material.

### CITATION LIST

### PATENT LITERATURE

[PTL 1] Japanese Patent Laid-open No. 2007-103040
[PTL 2] Japanese Patent Laid-open No. 2021-034205
[PTL 3] Japanese Patent Laid-open No. 2020-198301

### SUMMARY OF INVENTION

### TECHNICAL PROBLEM

A laminate that is a basic component of an all-solid-state battery is a structure in which a solid electrolyte layer is sandwiched between a positive electrode layer and a negative electrode layer. The use of metallic lithium as a negative electrode is currently under consideration, and a major challenge is to form a favorable interface by improving interparticle contact, particularly in the laminate constituted of the positive electrode layer and the solid electrolyte layer.

Studies carried out by the present inventors found that fabricating a laminate using a ternary positive-electrode material (NMC) and a garnet-type solid electrolyte (LLZ), which are materials similar to those described in PTL 2, by spark plasma sintering resulted in limited and insufficient contact. In addition, the sintering temperature of 800°C is high from the perspectives of energy conservation and side reactions (for example, between the negative electrode active material and the solid electrolyte) and there is room for improvement.

PTL 3 describes the possibility of improving interparticle contact (increasing contact probability) on an outer side of a shell portion of particulate lithium cobalt oxide (LCO), which is a positive electrode active material, by providing a plurality of projected portions. However, the improvement in contact by the configuration described above is insufficient and further improvements are desired. Furthermore, conceivably, the projected portions pose a risk of causing a short circuit when the solid electrolyte layer becomes thin.

At least one aspect of the present disclosure provides: an electrode composite which is a laminate of a positive electrode layer and a solid electrolyte layer, which has favorable contact between an electrode active material particle and a solid electrolyte particle, and which is not susceptible to occurrences of a short circuit, and moreover which can achieve favorable battery output power; and a battery which includes the electrode composite and a negative electrode layer. Specifically, the one aspect of the present disclosure provides a battery which achieves both improved contact between the electrode active material particle and the solid electrolyte particle and prevention of short circuits by reducing a particle size of the positive electrode active material in the positive electrode layer and predominantly distributing the positive electrode active material. In addition, another aspect of the present disclosure provides a method for manufacturing the electrode composite and a secondary battery.

### SOLUTION TO PROBLEM

At least one aspect of the present disclosure is directed to providing an electrode composite to be applied to a secondary battery, the electrode composite comprising:
a positive electrode active material layer and an electrolyte layer, wherein
the positive electrode active material layer has a first surface which is in contact with the electrolyte layer and a second surface which is located on an opposite side to the first surface and comprises a plurality of first active material particles and a plurality of second active material particles which have a higher average aspect ratio than the plurality of first active material particles, and a center of gravity position of the plurality of second active material particles is located on a farther side from the first surface than a center of gravity position of the plurality of first active material particles.

Moreover, at least one aspect of the present disclosure is directed to providing a secondary battery comprising: the above electrode composite; a negative electrode; and a current collector.

At least one aspect of the present disclosure is directed to providing a method for manufacturing an electrode composite to be applied to a secondary battery, the method comprising:
a lamination step of laminating a first material layer comprising active material particles and a second material layer comprising solid electrolyte particles and forming a laminate;
a pressure and voltage application step of applying positive pressure and an alternating voltage in a lamination direction of the laminate to form a composite; and
a sintering step of sintering the composite in an oxygen-containing atmosphere to form an electrode composite.

Moreover, at least one aspect of the present disclosure is directed to providing a method for manufacturing a secondary battery, the method comprising:
a step of manufacturing an electrode composite according to the above manufacturing method; and
a step of laminating the electrode composite, a negative electrode, and a current collector.

### ADVANTAGEOUS EFFECTS OF INVENTION

The present disclosure can provide: an electrode composite which is a laminate of a positive electrode layer and a solid electrolyte layer, and which has favorable contact between an electrode active material particle and a solid electrolyte particle, and which is not susceptible to occurrences of a short circuit, and moreover which can achieve favorable battery output power; a secondary battery which uses the electrode composite, and which has a high output power, and moreover which is capable of reducing the risk of a short circuit; and a method for manufacturing the same.

### BRIEF DESCRIPTION OF THE DRAWINGS

[FIG. 1] FIG. 1A is a conceptual diagram showing a method for manufacturing an electrode composite, and FIG. 1B is a conceptual diagram showing a method for manufacturing an electrode precursor.
[FIG. 2] FIG. 2A is a diagram schematically showing a configuration of a particle arranging apparatus 1, and FIG. 2B is a diagram schematically showing a configuration of a filling apparatus.
[FIG. 3] FIGs. 3A to 3D are schematic views showing, step by step, a state of a filler conveyed on a substrate and a vicinity of a surface of the substrate.
[FIG. 4] FIG. 4A is a diagram schematically showing a configuration of the filling apparatus when using brush fiber as a support material, and FIG. 4B is a diagram schematically showing a configuration of the filling apparatus when using an elastic material.
[FIG. 5] FIG. 5 is a diagram schematically showing a configuration of a transfer portion.
[FIG. 6] FIG. 6 is a schematic view of a support material conveyed on the substrate.
[FIG. 7] FIG. 7A is a schematic view showing a state of particles prior to a settling step, FIG. 7B is a schematic view showing a state of the particles after the settling step, and FIG. 7C is a schematic view illustrating a settling apparatus.
[FIG. 8] FIG. 8A is a schematic view showing the filling apparatus not using a belt apparatus, and FIG. 8B is a diagram schematically showing an operation of the filling apparatus.
[FIG. 9] FIG. 9 is an enlarged view of a vicinity of the surface of the substrate in a filling process by the filling apparatus.
[FIG. 10] FIG. 10A is a diagram schematically showing a second substrate after a first particle P1 has been transferred, FIG. 10B is a diagram schematically showing the second substrate after filling a second particle P2, FIG. 10C is a schematic view showing a cross section of the substrate and particles arranged on the substrate, FIG. 10D is a schematic view of the second substrate prior to the settling step, and FIG. 10E is a schematic view of the second substrate after the settling step.
[FIG. 11] FIG. 11A is schematic view of a configuration of a positive electrode precursor molding apparatus, and FIG. 11B is a schematic view of a cross section of a positive electrode precursor.
[FIG. 12] FIG. 12A is a schematic view illustrating lamination in a die, and FIG. 12B is a schematic view showing a state where pressure is applied from above and below in a lamination direction.
[FIG. 13] FIG. 13 is a schematic configuration diagram of a spark plasma sintering apparatus used in a third step.
[FIG. 14] FIG. 14A is a schematic view of a cross section showing a plurality of layers of a substrate on which a particle layer for a negative electrode has been arranged laminated on the laminate after a fourth step, and FIG. 14B is a schematic view of a cross section showing a negative electrode precursor laminated on the electrode composite.
[FIG. 15] FIG. 15A is an SEM image taken from above the positive electrode precursor prepared in a first step, and FIG. 15B is an SEM image of a cross section of the positive electrode precursor.
[FIG. 16] FIG. 16A is a sectional SEM image of a positive electrode layer of the electrode composite, FIG. 16B is an EDX image of cobalt comprised in positive electrode active material particles, and FIG. 16C is an EDX image of ytterbium comprised in solid electrolyte particles.
[FIG. 17] FIG. 17A is a sectional SEM image of positive electrode active material particles (LiCoO₂) in the positive electrode precursor, and FIG. 17B is a sectional SEM image of positive electrode active material particles in the laminate.
[FIG. 18] FIG. 18A is a sectional SEM image of the electrode composite after re-sintering in a fifth step, FIG. 18B is a diagram schematically showing a sectional structure of FIG. 18A, FIG. 18C is a partial enlarged view of FIG. 18A, and FIG. 18D is a partial enlarged view of FIG. 18B.
[FIG. 19] FIG. 19A is a sectional SEM image of the electrode composite, FIG. 19B is an EDX image of Co comprised in positive electrode active material particles, FIG. 19C is an SEM image taken from above a molded article, and FIG. 19D is a sectional SEM image of the molded article.
[FIG. 20] FIG. 20 is a schematic view showing an interior of a die during spark plasma sintering.
[FIG. 21] FIG. 21 represents an example of a charge-discharge curve in a charge-discharge measurement.
[FIG. 22] FIG. 22 is an enlarged image of a sectional SEM image of the laminate.
[FIG. 23] FIG. 23A represents an example of an EDX image of cobalt atoms on a cross section of a laminate used to determine particle morphology and distribution in an example, FIG. 23B represents an example of an image after performing expansion processing on FIG. 23A, and FIG. 23C represents an example of an image showing detection of individual particles in a cross section of the laminate.

### DESCRIPTION OF THE EMBODIMENTS

In the present disclosure, the expression of "from XX to YY" or "XX to YY" indicating a numerical range means a numerical range including a lower limit and an upper limit which are end points, unless otherwise specified. Also, when a numerical range is described in a stepwise manner, the upper and lower limits of each numerical range can be arbitrarily combined.

In addition, in the present disclosure, for example, descriptions such as "at least one selected from the group consisting of XX, YY and ZZ" mean any of XX, YY, ZZ, the combination of XX and YY, the combination of XX and ZZ, the combination of YY and ZZ, and the combination of XX, YY, and ZZ.

Studies carried out by the present inventors found that increasing the surface area of active material particles in a positive electrode and improving contact of the active material particles with a solid electrolyte are key to achieving high power output in an oxide-based all-solid-state battery. Specifically, a contact interface with the solid electrolyte particles can be increased and electronic conductivity in the positive electrode can be improved by reducing a particle size of the positive electrode active material in the positive electrode layer and predominantly distributing the positive electrode active material. In addition, a risk of a short circuit can be further reduced by predominantly distributing, on a current collector side, positive electrode active material particles with small particle sizes which are conceivably primarily responsible for electronic conductivity.

In the present disclosure, ionic conductivity and electronic conductivity will be evaluated using a metric referred to as "rate characteristics" of a prototype battery.

An electrode composite comprises a positive electrode active material layer and an electrolyte layer. The electrode composite may further comprise a current collector.

The electrode composite is preferably a laminate in which the positive electrode active material layer and the electrolyte layer are laminated. The electrode composite may be a laminate in which a current collector is further laminated. The electrolyte layer is preferably a solid electrolyte layer.

The positive electrode active material layer has a first layer in contact with the electrolyte layer and a second surface positioned on an opposite side of the first surface. The current collector can be arranged on the side of the second surface.

In addition, the positive electrode active material layer comprises a plurality of first active material particles and a plurality of second active material particles with a higher average aspect ratio than the plurality of first active material particles. The positive electrode active material layer preferably further comprises solid electrolyte particles.

A minor axis of the first active material particles is preferably greater than 130 nm. The minor axis of the first active material particles is more preferably greater than 250 nm and even more preferably greater than 500 nm. For example, the minor axis of the first active material particles preferably ranges from 250 to 20,000 nm and even more preferably ranges from 500 to 10,000 nm.

A minor axis of the second active material particles is preferably 130 nm or less. The minor axis of the second active material particles is more preferably 150 nm or less and even more preferably 100 nm or less. For example, the minor axis of the second active material particles preferably ranges from 1 to 150 nm and even more preferably ranges from 5 to 100 nm.

The plurality of second active material particles have a higher average aspect ratio than the plurality of first active material particles. The average aspect ratio of active material particles can be determined according to an SEM observation method to be described later.

An aspect ratio of the major axis to the minor axis of the second active material particles is preferably equal to or greater than 2. In other words, a value of the ratio of the major axis to the minor axis (major axis/minor axis) is preferably than 2.0 or more. The aspect ratio of the major axis to the minor axis of the second active material particles is more preferably 1.5 or more and even more preferably 3.0 or more.

The aspect ratio of the major axis to the minor axis of the first active material particles is preferably smaller than 2. In other words, a value of the ratio of the major axis to the minor axis (major axis/minor axis) is preferably smaller than 2.0.

The minor axis of the first active material particles is preferably greater than 130 nm or the average aspect ratio of the first active material particles is preferably smaller than 2. The minor axis of the second active material particles is preferably 130 nm or less and the aspect ratio of the major axis to the minor axis of the second active material particles is preferably 2 or more.

Making the minor axis of the second active material particles 130 nm or less and the aspect ratio of the major axis to the minor axis of the second active material particles 2 or more enables a surface area of the active material particles in the positive electrode layer to be increased and the contact with solid electrolyte particles to be improved.

On the other hand, when only the second active material particles are used, a large number of the small-particle-size second active material particles will also be present on the side of the electrolyte layer of the electrode composite, increasing the likelihood that short circuits will occur. Because the electrode composite comprises the first active material particles and the second active material particles, both favorable contact between the electrode active material particles and the solid electrolyte particles and suppression of short circuits can be achieved and a high battery output can be produced.

For example, performing re-sintering under specific conditions in the method for manufacturing the electrode composite to be described later, a positive electrode active material layer comprising the first active material particles and the second active material particles can be obtained.

The active material particles are not particularly limited and known active material particles can be used. For example, a composite oxide comprising lithium can be used. Specific examples of active material particles include: Li-Co oxide-based active material particles such as lithium cobalt oxide (LiCoO₂); active material particles such as LiMO₂ (where M is a single element selected from the group consisting of Ni, Mn, and Co); Li-PO₄ oxide-based active material particles; lithium vanadium compounds (Li₃V₂(PO₄)₃, LiVOPO₄), and olivine-type phosphate compounds (LiMPO₄, where M is one or more elements selected from the group consisting of Co, Ni, Mn, Fe, Mg, V, Nb, Ti, Al, and Zr). In addition, a positive electrode active material not comprising lithium may be used.

The active substance particles may be commercially available or prepared separately as a material.

The active material particles preferably comprise Li, Co, and O. In other words, the first active material particles and the second active material particles preferably comprise active material particles comprising Li, Co, and O. The first active material particles and the second active material particles preferably comprise at least one compound in which a portion of Li and Co in lithium cobalt oxide has been replaced by at least one element selected from the group consisting of Ni, Mn, Mg, Al, Fe, Si, C, and B, and lithium cobalt oxide. As the lithium cobalt oxide, for example, CELLSEED C-5H (product name, manufactured by Nippon Chemical Industrial Co., Ltd.) or the like can be used.

A center of gravity position of the plurality of second active material particles is positioned on a farther side from the first surface than a center of gravity position of the plurality of first active material particles. Specifically, in a cross-sectional observation of the positive electrode active material layer by a scanning electron microscope (SEM), the center of gravity position of the plurality of second active material particles is positioned more toward a side of the second surface or, in other words, on an opposite side to the first surface in contact with the solid electrolyte layer than the center of gravity position of the plurality of first active material particles.

In the present disclosure, the center of gravity position of active material particles refers to an average distance from an end portion of the positive electrode active material layer on the side of the second surface to the active material particles. Center of gravity positions can be measured using a scanning electron microscope according to a measurement method described later.

For example, performing re-sintering under specific conditions in the method for manufacturing the electrode composite to be described later enables the center of gravity position of each of the active material particles to be controlled. The method is preferable because it allows the center of gravity position of each of the active material particles to be controlled during a positive electrode molding process without requiring complex steps.

Examples of other control methods include a method involving preparing a material including the first active material particles and a method including the second active material particles in advance and manufacturing an electrode composite so that the material including the second active material particles is positioned on a farther side from the first surface than the material comprising the first active material particles.

The center of gravity position of each of the active material particles in the cross-sectional observation of the positive electrode active material layer by a scanning electron microscope (SEM) can be measured according to a method to be described later.

The center of gravity position of the first active material particles and the center of gravity position of the second active material particles satisfying the relationship described above means that the plurality of second active material particles which have a small minor axis and a specific shape are predominantly distributed more toward the side of the second surface than the plurality of first active material particles which have a large minor axis in the cross-sectional observation of the positive electrode active material layer. In other words, the plurality of second active material particles comprised in the positive electrode active material layer are preferably predominantly distributed on the side of the second surface. In addition, the plurality of first active material particles comprised in the positive electrode active material layer are preferably predominantly distributed on the side of the first surface.

In the present disclosure, active material particles being predominantly distributed on the side of the second surface (or the side of the first surface) means that, in the cross-sectional observation of the positive electrode active material layer by an SEM, 60% or more by number of the observed active material particles are positioned in a one-third region on the side of the second surface (or the side of the first surface).

In other words, the plurality of second active material particles being predominantly distributed on the side of the second surface means that 60% or more by number of all second active material particles specified in the cross-sectional observation of the positive electrode active material layer by an SEM are included in the one-third region on the side of the second surface of the positive electrode active material layer. A specific method of determining an uneven distribution of active material particles will be described later.

The plurality of second active material particles with a small minor axis being predominantly distributed more toward the side of the second surface than the plurality of first active material particles with a large minor axis enables a contact interface with solid electrolyte particles to be increased and contact between electrolyte particles and active material particles to be improved. In addition, since charges are likely to concentrate on the second active material particles which have a high aspect ratio of the major axis to the minor axis, the second active material particle being predominantly distributed toward the second surface or, in other words, toward the side of the current collector facilitates the transfer of electrons from the side of the current collector. For the reasons provided above, the electrode composite having the configuration described above enables output of a secondary battery to be improved.

The center of gravity position of each of the active material particles in the cross-sectional observation of the positive electrode active material layer by a scanning electron microscope (SEM) can be measured according to the method to be described later.

The solid electrolyte particles are not particularly limited and ion-conductive solids typically used in all-solid-state batteries can be used. Examples include Li-Yb oxide-based solid electrolyte particles, Li-B oxide-based solid electrolyte particles, NASICON-type solid electrolyte particles (LiAlTi(PO₄)₃, LiAlGe(PO₄)₃, and the like), and Li-P-O-based solid electrolyte particles (Li₃PO₄, LiPON (particles in which some of the oxygen in Li₃PO₄ is replaced by nitrogen), and the like).

The solid electrolyte particles may be commercially available or prepared separately as a material. As a commercially-available product, for example, lithium borate (manufactured by Toshima Manufacturing Co., Ltd.) or the like is preferably used. As a separately prepared material, for example, solid electrolyte particles in which some of the lithium or boron in lithium borate have been replaced by carbon or the like are preferably used. Furthermore, Li-Yb oxide-based solid electrolyte particles are preferably used. As the Li-Yb oxide-based solid electrolyte particles, for example, Li_{5.9}Yb_{0.81}La_{0.09}Zr_{0.1}(BO₃)₃ or the like can be used.

The solid electrolyte particles may be comprised in both the positive electrode active material layer and the electrolyte layer. In such a case, the solid electrolyte particles comprised in the positive electrode active material layer may be the same as or may differ from the solid electrolyte particles comprised in the electrolyte layer. More preferably, the solid electrolyte particles comprised in the positive electrode active material layer is the same as the solid electrolyte particles comprised in the electrolyte layer.

The electrode composite preferably further comprises a current collector. The current collector exchanges electrons with the positive electrode active material layer. The current collector is preferably laminated so as to be in contact with the second surface of the positive electrode active material layer. In other words, the second surface is preferably a surface in contact with the current collector.

As described above, the first surface of the positive electrode active material layer is a surface in contact with the electrolyte layer. The electrolyte layer and the first active material particles comprised in the positive electrode active material layer are preferably in contact with each other via the first surface.

The first active material particles preferably have inner surfaces inside the particles. In this case, the inner surface refers to a surface present inside the active material particles.

The first active material particles having inner surfaces inside enables a contact interface with the electrolyte to be increased and power output characteristics of the battery to be improved. For example, the first active material particles having inner surfaces inside can be obtained by controlling an atmosphere of sintering and reductively decomposing active material particles in a manufacturing step to be described later. Whether active material particles have inner surfaces inside can be confirmed by cross-sectional observation using an SEM to be described later.

The inner surface of the active material particles preferably constitutes vacancies within the active material particles which are communicated to an outer surface of the active material particles. Because the inner surface constitutes vacancies, the inner surface can function as pores which mitigate volume fluctuations of active material particles during charging and discharging. In addition, because the inner surface is communicated with the outer surface of the active material particles, the inner surface can come into contact with the electrolyte and a contact interface can be increased. For example, active material particles having vacancies constituted of inner surfaces can be obtained by controlling an atmosphere of sintering and reductively decomposing active material particles in a manufacturing step to be described later. Whether the inner surface of the active material particles constitute vacancies can be confirmed by cross-sectional observation using an SEM to be described later.

The second active material particles preferably have a higher number density per unit volume than the first active material particles. In other words, the second active material particles preferably have a smaller volume per particle than the first active material particles.

Because the second active material particles have a smaller volume per particle and a higher number density than the first active material particles, the surface area of the active material particles increases and the contact interface with the electrolyte increases. As a result, power output characteristics of the battery can be improved. The volume of each of the active material particles can be confirmed by cross-sectional observation using an SEM to be described later.

The second active material particles preferably comprise flakes with a thickness smaller than the average particle diameter of the first active material particles and/or needles with a diameter smaller than the average particle diameter of the first active material particles. In the present disclosure, a flake refers to a particle of which the aspect ratio of the major axis to the minor axis is 2 or more and which has a flat shape. In addition, a needle refers to a particle of which the aspect ratio of the major axis to the minor axis is 2 or more and which has a needle-like shape.

Because the second active material particles comprise flakes and/or needles, the contact between the electrolyte particles and the active material particles can be increased, and since charges more readily concentrate, the exchange of electrons can be facilitated and the power output characteristics of the battery can be improved. For example, performing re-sintering under specific conditions in the method for manufacturing the electrode composite to be described later enables the second active material particles to be configured so as to comprise the flakes and/or needles described above. The shape of the second active material particles can be confirmed by cross-sectional observation using an SEM to be described later.

The second active material particles are preferably present separated from the first active material particles. In other words, the second active material particles and the first active material particles are preferably not in contact in the positive electrode active material layer.

Because the second active material particles are present separated from the first active material particles, the surface area of the active material particles can be further increased, the contact interface with the electrolyte can be increased, and the power output characteristics of the battery can be improved. In addition, because the second active material particles can be predominantly distributed in the vicinity of the current collector, the exchange of electrons with the current collector can be facilitated, diffusivity of the electrons in the positive electrode can be improved, and the power output characteristics of the battery can be improved. For example, re-sintering a sample subjected to spark plasma sintering in the manufacturing process to be described later enables the second active material particles to be present separated from the first active material particles. The shape and the state of presence of the active material particles can be confirmed by cross-sectional observation using an SEM to be described later.

A dispersion of positions of the first surface in a thickness direction of the positive electrode active material layer is preferably greater than that of the second surface. In other words, the first surface is preferably more widely dispersed than the second surface in terms of positions in the thickness direction of the positive electrode active material layer.

Adopting the configuration described above enables a favorable contact interface to be formed between the active material particles and the solid electrolyte, and since charges more readily concentrate, the exchange of electrons can be facilitated and the power output characteristics of the battery can be improved. The state of dispersion can be confirmed by cross-sectional observation using an SEM to be described later.

The first surface preferably includes a portion which overlaps with the plurality of first active material particles in the thickness direction of the electrode composite. In addition, the first surface preferably does not include a portion which overlaps with the plurality of second active material particles in the thickness direction of the electrode composite 17. In other words, on the first surface, preferably, the plurality of first active material particles and the electrolyte layer are in contact with each other but the first surface is not in contact with the second active material particles. Adopting the configuration described above enables a favorable contact interface to be formed between the first active material particles and the electrolyte layer, and by further arranging the second active material particles P2 which are prone to causing short circuits at a distance from the first surface PP, the risk of short circuits can be reduced.

The electrode composite may further comprise a negative electrode active material layer. The negative electrode active material layer is preferably laminated so as to be in contact with the electrolyte layer of the electrode composite.

### <Method for Manufacturing Electrode Composite>

Hereinafter, an example of a method for manufacturing an electrode composite which is a laminate in which a positive electrode active material layer and an electrolyte layer are laminated will be described with reference to the drawings.

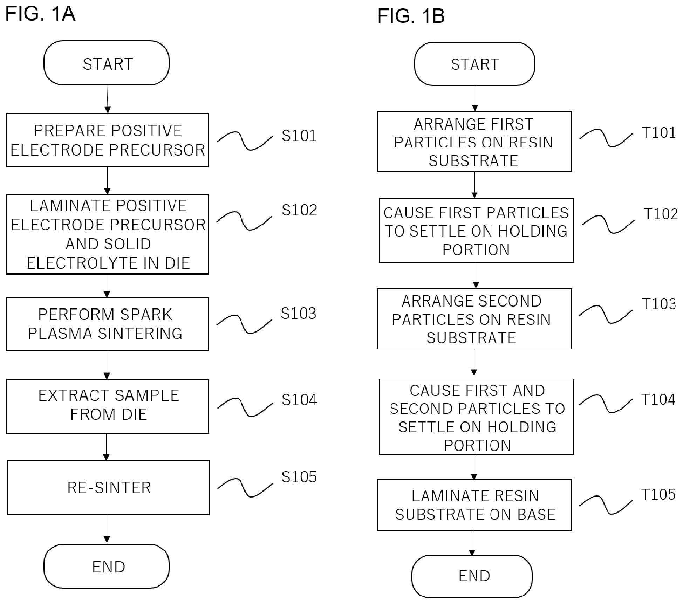

The method for manufacturing an electrode composite includes the five steps (first step, second step, third step, fourth step, and fifth step) described below.
(1) First step of preparing a positive electrode precursor using a method for manufacturing a positive electrode precursor to be described later (S101 in FIG. 1A)
(2) Second step of laminating the positive electrode precursor and a solid electrolyte in a sintering die (hereinafter, die) to be used in spark plasma sintering (S102 in FIG. 1A)
(3) Third step of executing the spark plasma sintering (S103 in FIG. 1A)
(4) Fourth step of extracting a sample from inside the die and performing post-processing if necessary (S104 in FIG. 1A)
(5) Fifth step of executing re-sintering to adjust a composition of the positive electrode active material (S105 in FIG. 1A)

### (First Step)

The first step is a step of preparing a positive electrode precursor. In this case, the positive electrode precursor refers to a structure in which a resin substrate on which positive electrode active material particles and solid electrolyte particles are arranged is laminated on a base. One or a plurality of resin substrates are optionally selected according to a desired battery capacity.

In the structure, ionic conductivity and electronic conductivity are inhibited by the presence of the resin substrate. Therefore, the structure does not function as a positive electrode and only begins to do so after the resin substrate is removed through a heat treatment to be described later. Therefore, in the present disclosure, the structure is referred to as a positive electrode precursor. The method for manufacturing the positive electrode precursor will be described in detail.

### <Method for Manufacturing Positive Electrode Precursor>

Hereinafter, an example of a method for manufacturing a positive electrode precursor will be described. The method for manufacturing a positive electrode precursor includes the five steps (step I, step II, step III, step IV, and step V) described below.
(I) Step I of arranging first particles P1 (positive electrode active material particles or solid electrolyte particles) on a resin substrate comprising a holding portion for holding particles (T101 in FIG. 1B)
(II) Step II of causing the first particles P1 to settle in the holding portion (T102 in FIG. 1B)
(III) Step III of arranging second particles P2 (first solid electrolyte particles or positive electrode active material particles) in a region where the first particles P1 are not arranged on the resin substrate (T103 in FIG. 1B)
(IV) Step IV of causing the first particles P1 and the second particles P2 (positive electrode active material particles and solid electrolyte particles) to settle in the holding portion (T104 in FIG. 1B)
(V) Step V of laminating, on a base, the resin substrate on which the first and second particles have been arranged (T105 in FIG. 1B)

### (Step I and Step II)

Step I and step II are steps of arranging the first particles on the resin substrate and causing the first particles to settle in the holding portion on the resin substrate. The first particles are positive electrode active material particles or solid electrolyte particles. In step I and step II, particles are arranged on the resin substrate using a particle arranging apparatus 1. Hereinafter, the particle arranging apparatus 1 will be described.

### [Particle Arranging Apparatus 1]

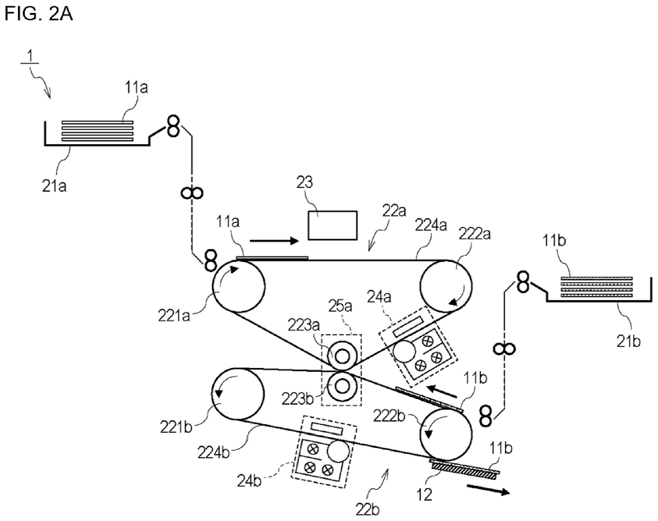

FIG. 2A is a diagram schematically showing a configuration of the particle arranging apparatus 1. Hereinafter, a method of arranging particles will be described using an example of a case where the positive electrode active material particles described above are used as the first particles P1. As described above, the first particles P1 may be solid electrolyte particles.

The particle arrangement apparatus 1 has a first storage container 21a that stores and supplies a first base material 11a, a first belt apparatus 22a that transports the first base material 11a, and a pattern forming apparatus 23 that forms an unevenness pattern on the first base material 11a.

The particle arrangement apparatus 1 has a first filling apparatus 24a that arranges the first particles P1 in the depressed portions of the unevenness pattern formed on the first base material 11a. The particle arrangement apparatus 1 has a second storage container 21b that stores and supplies a second base material 11b and a second belt apparatus 22b that transports the second base material 11b. The second substrate 11b is a resin substrate comprising a holding portion for holding the first particles P1.

The particle arrangement apparatus 1 has a transfer unit 25a in which rollers 223 of the first belt apparatus 22a and the second belt apparatus 22b face each other, and in the transfer unit 25a, the first particles P1 are transferred from the first base material 11a to the second base material 11b.

Furthermore, the particle arranging apparatus 1 comprises a first settling apparatus 24b which causes the first particles P1 to settle in the holding portion. Note that apparatuses of low relevance to the description of the effects of the present case, such as a separation and collection apparatus that separates and collects the first base material 11a after transfer from the first belt apparatus 22a, or various cleaning apparatuses, are not illustrated, and their detailed description will be omitted.

In the particle arrangement apparatus 1, the pattern forming apparatus 23, the first filling apparatus 24a, and the transfer unit 25a correspond to first arrangement means for arranging the first particles P1 on the second base material 11b in a pattern. In addition, the first settling apparatus 24b corresponds to first settling means which causes the first particles P1 to settle in the holding portion of the substrate 11b.

Hereinafter, a method of arranging particles on the second substrate 11b and causing the particles to settle using the particle arranging apparatus 1 will be described step by step for each process.

First, the first base material 11a is supplied from the first storage container 21a to the first belt apparatus 22a by supply means (not illustrated).

When an ultraviolet-curable liquid is applied by the pattern forming apparatus 23 (which will be described later), at least the surface of the first base material 11a is preferably made of a material having high wettability to the ultraviolet-curable liquid. Furthermore, the surface of the first base material 11a is preferably smooth.

The first base material 11a can be a resin sheet such as polyester, which has been subjected to hydrophilic or lipophilic treatment to correspond to the ultraviolet-curable liquid (aqueous or oil-based) to be used. Note that the first base material 11a may also be an individually separated base material such as cut paper, a continuous base material wound in a roll shape such as roll paper, or a continuous base material folded alternately such as continuous paper.

The first belt apparatus 22a transports the supplied first base material 11a to the pattern forming position of the pattern forming apparatus 23. The first belt apparatus 22a has drive rollers 221a and 222a, a pressing roller 223a, and a belt-shaped transport member 224a suspended between these rollers. At this time, the pressing roller 223a rotates in a driven manner.

The transport member 224a is preferably a belt made of resin or metal, and can be, for example, a resin belt made of polyimide. The drive rollers 221a and 222a are preferably metal rollers, and can be, for example, metal rollers made of stainless steel. The pressing roller 223a is preferably a soft roller having an elastic layer on its layer, and can be, for example, a soft roller having an elastic layer made of silicone rubber on the surface of a stainless steel core.

Note that in FIG. 2A, the first belt apparatus 22a is used as a transport apparatus that transports the first base material 11a, however, a roller apparatus may be used instead of the belt apparatus. The same applies to the second belt apparatus 22b, which will be described later.

The pattern forming apparatus 23 forms a fine unevenness pattern on the first base material 11a transported to the pattern forming position. Examples of methods for forming the unevenness pattern include a UV imprint method, a thermal imprint method, a UV inkjet method, a printing method, and a laser etching method.

When the pattern forming apparatus 23 forms an unevenness pattern using a UV imprint method, the pattern forming apparatus 23 has application means for applying an ultraviolet-curable liquid onto the first base material 11a. Furthermore, the pattern forming apparatus 23 has stamping means for pressing a mold having an unevenness pattern formed on its surface against the ultraviolet-curable liquid on the first base material 11a, and a light source that irradiates the ultraviolet-curable liquid with ultraviolet rays. Typically, the ultraviolet-curable liquid can be ultraviolet-curable liquid silicone rubber (PDMS) or resin, the mold can be a film mold, and the light source can be a UV lamp.

When the first filling apparatus 24a fills the first particles P1 into the depressed portions on the base material 11a using a bearing material S1 that carries the first particles P1, the opening diameter of the depressed portions of the unevenness pattern on the first base material 11a is preferably larger than the cumulative 50% particle diameter (median diameter) on a volume basis of the first particles P1. Furthermore, the opening diameter of the depressed portions is preferably smaller than the average size of the bearing material S1. Here, the opening diameter of the depressed portions of the unevenness pattern is preferably the opening diameter of the depressed portions in the width direction, and more preferably the maximum opening diameter of the depressed portions in the width direction. By setting the opening diameter as above, the first particles P1 can come into contact with the bottoms and side surfaces (typically the bottom surfaces) of the depressed portions of the unevenness pattern. On the other hand, the bearing material S1 cannot come into contact with the bottoms and side surfaces of the depressed portions. As a result, the first particles P1 that come into contact with the bottoms and side surfaces of the depressed portions can be captured by the unevenness pattern, whereas the bearing material S1 cannot be captured by the unevenness pattern. In other words, the first particles P1 can preferably come into contact with the bottoms and side surfaces of the depressed portions, and that the first bearing material S1 cannot come into contact with the bottoms and side surfaces of the depressed portions of the unevenness pattern.

Note that although the pattern forming apparatus 23 forms an unevenness pattern on the first base material 11a, a base material having an unevenness pattern previously formed on its surface may be used as the first base material 11a. Furthermore, the pattern forming apparatus 23 may directly form an unevenness pattern on the surface of the transport member 224a of the first belt apparatus 22a, or the transport member 224a may be a transport member having an unevenness pattern on its surface. In this case, in consideration of durability, it is preferable to use a metal belt, such as stainless steel or aluminum, and to form the unevenness pattern on the surface by a fine processing technique such as laser etching, wet etching, or dry etching.

The first base material 11a having an unevenness pattern on its surface is transported to the filling position of the first filling apparatus 24a by the first belt apparatus 22a.

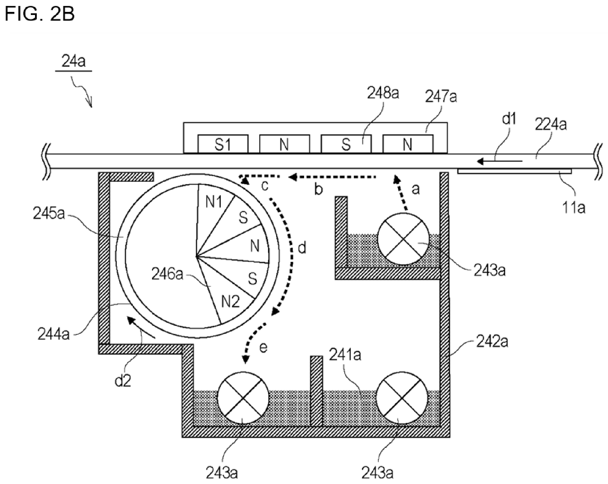

FIG. 2B is a view schematically illustrating the configuration of the filling apparatuses. Hereinafter, the configuration of the first filling apparatus 24a will be described.

The first filling apparatus 24a has a filling container 242a that accommodates a filler 241a, an agitation screw member 243a that agitates and transports the filler 241a, a collection member 244a that collects the filler, and a magnetic member 247a.

The filler 241a has the first particles P1 and the bearing material S1 that bears the first particles P1. The filler 241a is a mixture of a plurality of powders comprising a powder composed of a plurality of the first particles P1 and a powder composed of a plurality of the bearing materials S1. The filler 241a accommodated in the filling container 242a is agitated by the agitation screw member 243a and sufficiently mixed as it is transported. As a result, the first particles P1 are borne on the surface of the bearing material S1. Examples of the forces acting between the particles during bearing include Van der Waals forces or liquid bridge forces, in addition to electrostatic forces caused by frictional charging or the like.

The bearing material S1 is composed of magnetic particles. The bearing material S1 is preferably composed of particles obtained by coating the surfaces of resin particles, in which ferrite core particles and a magnetic substance are dispersed, with a resin composition. For example, a standard carrier, which is composed of magnetic particles (standard carrier P02 produced by The Imaging Society of Japan), or the like can be used. The particle diameter and material of bearing material S1 are appropriately selected in accordance with the particle diameter and material of the first particle P1. As a result, the first particle P1 can be stably borne. Furthermore, even when the first particle P1 tends to agglomerate due to its small particle diameter or the like, agitation and transport together with the bearing material S1 serves to disperse agglomeration.

The particle diameter of the bearing material S1 can be appropriately adjusted depending on the sizes (area, width, and depth) of the depressed portions. For example, the cumulative 50% particle diameter (median diameter) on a volume basis is preferably from 50 to 100 µm.

The collection member 244a has a roller 245a rotatable in the direction indicated by arrow d2 in the figure, and a magnet 246a arranged inside the roller 245a and fixed to the filling container 242a. Furthermore, the magnetic member 247a is arranged facing the filling container 242a via the transport member 224a and has a magnet 248a therein.

The magnet 246a has a plurality of N and S poles alternately arranged along the rotational direction of the collection member 244a. The magnet 248a has a plurality of N and S poles alternately arranged along the transport direction of the transport member 224a. Furthermore, the magnet 246a has a magnetic pole of opposite polarity (N1 pole in the embodiment shown in FIG. 2B) at the position that faces closest to the most downstream magnetic pole (S1 pole in the embodiment shown in FIG. 2B) of the magnet 248a, and an N2 pole that has the same polarity as the N1 pole is arranged at the most downstream position.

Note that the magnets 246a and 248a may be composed of a plurality of magnets, and the types of magnets constituting the magnets 246a and 248a are not particularly limited. For example, a rare-earth magnet such as a ferrite magnet, a neodymium magnet, or a samarium-cobalt magnet, a permanent magnet such as a plastic magnet, or means for generating a magnetic field such as an electromagnet can be used. Note that the magnet 248a may be configured to be movable in the transport direction of the first base material 11a or in the opposite direction.

Note that, on the upstream or downstream side of the collection member 244a in the transport direction of the transport member 224a, a regulating member that regulates the filler 241a on the first base material 11a or a collection member that collects again the filler 241a not collected by the collection member 244a may be provided. The collection member that collects the filler 241a again can be, in addition to a member similar to the collection member 244a, a collection member that collects by air blow using a simple member such as a fixed magnet or a regulating member, or the like.

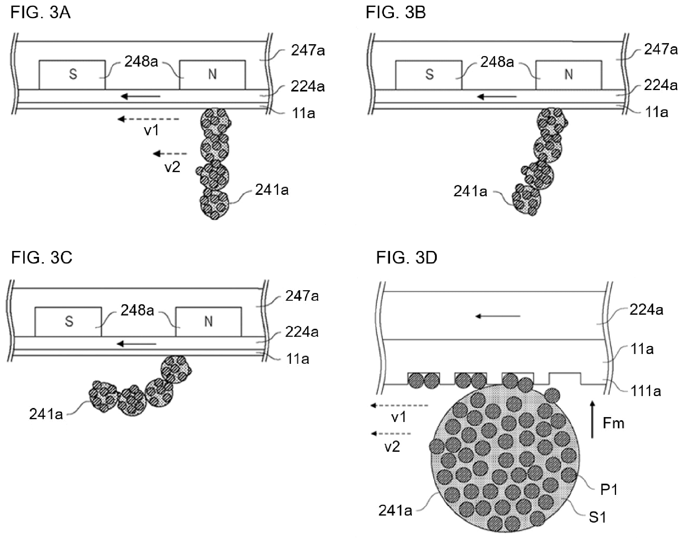

Next, the process of filling the first particles P1 into the depressed portions on the first base material 11a by the first filling apparatus 24a will be described with reference to FIGS. 2B and 3A to 3D.

As the first transport member 224a moves in the direction indicated by solid arrow d1 in FIG. 2B, the first base material 11a, which is borne and transported by the first transport member 224a, is transported to the filling position of the first filling apparatus 24a.

The filler 241a is transported by the agitation screw member 243a and supplied onto the first base material 11a (as indicated by dotted line a in FIG. 2B). At this time, a magnetic field is formed by the magnetic member 247a and the collection member 244a, and the filler 241a comprising the bearing material S1, which is composed of magnetic particles, forms a plurality of magnetic brushes on the first base material 11a under the magnetic field. The filler 241a supplied onto the first base material 11a is transported on the first base material 11a while forming the magnetic brushes as the first base material 11a moves (as indicated by dotted line b in FIG. 2B).

FIGS. 3A to 3C are schematic views of the filler 241a transported on the first base material 11a. For explanatory purposes, fillers 241a other than the filler forming a single magnetic brush are omitted in the figures. As described above, the filler 241a on the first base material 11a forms a magnetic spike along the magnetic field lines of the formed magnetic field, and as the first base material 11a moves, the filler 241a is transported while changing the shape of the magnetic spike as illustrated in FIGS. 3A, 3B and 3C. At this time, a particularly strong magnetic force acts in the vicinity of the magnet 248a. Therefore, a transport speed v2 of the filler 241a becomes smaller than a movement speed v1 of the first base material 11a when the filler 241a moves away from the magnetic pole, and becomes larger than the movement speed v1 when the filler 241a moves closer to the magnetic pole. That is, the filler 241a on the first base material 11a has a nonzero relative speed with respect to the first base material 11a.

FIG. 3D is an enlarged view illustrating the vicinity of a surface of the first base material 11a in FIGS. 3A to 3C. Although not illustrated in FIGS. 3A to 3C, an unevenness pattern 111a is formed on the first base material 11a as illustrated in FIG. 3D.

The filler 241a comes into contact with the unevenness pattern 111a and is transported together with the first base material 11a, maintaining a nonzero relative speed with respect to the first base material 11a, while receiving a magnetic force (as indicated by arrow Fm in the figure) in a direction perpendicular to the surface of the first base material 11a. As a result, the first particles P1 borne by the bearing material S1 are transported while being rubbed against the unevenness pattern 111a on the surface of the first base material 11a.

At this time, the particle diameter of the first particles P1 is smaller than the opening diameter of the depressed portions of the unevenness pattern 111a, whereas the particle diameter of the first bearing material S1 is larger than the opening diameter of the depressed portions. Therefore, the first particles P1 can come into contact with the bottom surfaces (bottoms) and side surfaces of the depressed portions of the unevenness pattern 111a, while the bearing material S1 cannot. That is, only the first particles P1 of the filler 241a selectively come into contact with the bottom surfaces and side surfaces of the depressed portions.

The first particles P1 that have come into contact with the depressed portions are strongly restrained by a physical restraining force due to the structure of the unevenness pattern 111a, or by an electrostatic attachment force or a non-electrostatic attachment force such as an adhesive force with respect to the structural materials constituting the first base material 11a and the unevenness pattern 111a, and are separated from the bearing material S1. Note that in FIG. 3D, the first particles P1 are borne on the surface of the bearing material S1 for explanatory purposes, however, when the filler 241a is agitated, supplied, or transported, some of the particles P1 may not be borne on the bearing material S1.

As illustrated in FIG. 2B, the collection member 244a is arranged downstream of the magnetic member 247a with a gap relative to the first transport member 224a. As the first base material 11a moves, the filler 241a, which has been transported to the vicinity of the most downstream magnetic pole (S1 pole) of the magnet 248a, is transferred from the first base material 11a to the collection member 244a under the influence of the magnetic field formed by the magnet 246a, and is collected (as indicated by dotted line c in FIG. 2B).

As described above, during the transport process (as indicated by dotted lines a, b, and c in FIG. 2B), the depressed portions of the unevenness pattern 111a on the surface of the first base material 11a sufficiently come into contact with the fillers 241a. Therefore, after the filler 241a has been collected by the collection member 244a, the first particles P1 are selectively and densely arranged in the depressed portions of the unevenness pattern 111a.

Note that although FIGs. 3A to 3D show all of the first particles P1 as having a same particle size, in reality, there is a particle size distribution and; furthermore, depending on the material, agglomerated secondary particles may form. In addition, more often than not, shapes are not as spherical as illustrated. Even in such cases, since only particles capable of coming into contact with the depressed portions of the irregular pattern 111a densely fill the depressed portions in a selective manner, coarse particles and secondary particles which may adversely affect the particle arrangement step are readily excluded.

In this manner, an amount of the first particles P1 which fill the depressed portions of the irregular pattern 111a can be controlled by a size (area, width, and depth) of the depressed portions and the particle size of the first particles P1. Specifically, the area of the depressed portions is approximately equal to a filled area, and the thickness of the filled first particles P1 is determined by the depth of the depressed portions.

For example, in order to obtain a thin layer (single layer) having an area ratio of 50% relative to the area of the base material, the area ratio of the depressed portions (the ratio of the area of the depressed portions to the total area of the unevenness pattern) may be controlled to 50%, and the depth of the depressed portions may be controlled to be not more than the particle diameter of the first particle P1. At this time, the opening width of the depressed portions is set to be larger than the median diameter of the first particle P1 and smaller than the average size (here, average particle diameter) of the bearing material S1.

Note that the first particle P1 may have a broad particle size distribution, whereas the bearing material S1 preferably has a narrow particle size distribution, and more preferably is monodisperse. This makes it easier to prevent the bearing material S1 from coming into contact with the bottoms (or bottom surfaces) and the side surfaces of the depressed portions. If the bearing material S1 can come into contact with the bottoms and side surfaces of the depressed portions, there is a risk that the bearing material S1 may also be restrained and filled within the depressed portions.

In addition, the opening width of the depressed portions of the unevenness pattern 111a is preferably smaller than four times the particle diameter of the first particle P1. By making the opening width smaller than four times the particle diameter of the first particle P1, the probability that the first particles P1 come into contact with two points, i.e., the bottom surfaces and side surfaces of the depressed portions of the unevenness pattern 111a can be increased. As described above, the first particles P1, which come into contact with the unevenness pattern 111a at multiple points, are strongly restrained by the unevenness pattern 111a, therefore, the efficiency of filling the first particles P1 into the unevenness pattern 111a can be improved.

Note that the same applies to the particle diameter of the second particle P2, which will be described later, and to the size of the depressed portions of an unevenness pattern formed on the second base material by the first particles P1. Furthermore, when brush fibers are used as the bearing material, the "average particle diameter of the bearing material" in the above description refers to the "average fiber diameter of the bearing material."

The filler 241a collected by the collection member 244a is transported by the roller 244a, which serves as a rotating collection member (as indicated by dotted line d in FIG. 2B). The filler 241a transported by the roller 244a falls into the filling container 242a under the influence of the magnetic field generated by two adjacent magnetic poles of the same polarity (N1 and N2) that repel each other, and the gravity (as indicated by dotted line e in FIG. 2B). Thereafter, the filler 241a is agitated and transported again by the agitation screw member 243a, and this process is repeated.

The mass ratio of the first particles P1 to the bearing material S1 in the filler 241a inside the filling container 242a is determined by an inductance sensor that performs measurement using magnetic permeability, a patch density sensor that performs measurement on the basis of reflection density on a base material, and the like, which are commonly used in electrophotographic apparatuses. Then, if necessary, at least one of the first particles P1 and the bearing material S1 is replenished by replenishment means (not illustrated). As a result, stable filling is possible over a long period of time.

Note that although the filling apparatus has been described in which the particle material is filled into the depressed portions by forming so-called magnetic spikes with the magnetic particles serving as the bearing material, the filling apparatus is not limited to thereto. The bearing material can be brush fibers. Alternatively, the bearing material can be an elastic material having at least its surface made of an elastic body.

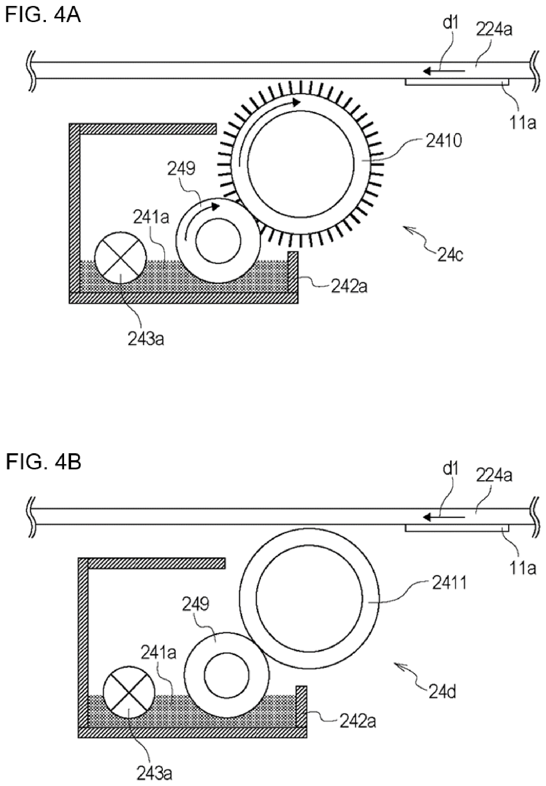

FIG. 4A is a view schematically illustrating the structure of a filling apparatus 24c in which brush fibers are used as the bearing material.

The filling apparatus 24c has a roller 2410 having brush fibers on its surface. The roller 2410 is a so-called brush roller having brush fibers planted on its surface. The fibers constituting the brush of the roller 2410 can be, for example, nylon, rayon, acrylic, vinylon, polyester, vinyl chloride, or the like. For the purpose of adjusting the charging property and rigidity, the fiber surfaces may be subjected to surface treatment.

The filling apparatus 24c comprises a supplying member which supplies the filler 241a to the roller 2410. Note that the filler 241a comprises powder constituted of a plurality of the first particles P1 and are stored in the filler container 242a. In addition, in the present example, the filler 241a does not comprise the support material S1 constituted of magnetic particles. The filler 241a is stirred and conveyed by the stirring screw member 243a and supplied to the supplying member 249.

The supply member 249 is a member that supplies the filler 241a to the roller 2410, and its structure is not particularly limited. The supply member 249 can be, for example, a roller having at least its surface made of a porous foam material having elasticity. Typically, an elastic sponge roller having a foamed skeleton structure and a relatively low-hardness polyurethane foam formed on the core can be used. Note that, in addition to urethane, the foaming material can be made of various rubber materials such as nitrile rubber, silicone rubber, acrylic rubber, hydrin rubber, and ethylene-propylene rubber.

The filler 241a thus supplied is filled into the foaming material on the surface of the supply member 249 and conveyed to a supply unit where the filler 241a comes into contact with the roller 2410. At the supply unit, the filler 241a filled into the foaming material is charged through contact with the brush fibers of roller 2410 and is borne by the brush fibers of roller 2410. In addition, the supply member 249 may also have the function of separating the filler 241a remaining on the roller 2410 and refreshing the roller 2410. The filler 241a supplied to the roller 2410 comes into contact with the first base material 11a as the brush fibers move.

At this time, the first particles P1 in the filler 241a are configured to be capable of coming into contact with the bottom surfaces and side surfaces of the depressed portions of the unevenness pattern 111a on the surface of the first base material 11a, while the brush fibers cannot. That is, the fiber diameter of the brush fibers is set to be larger than the opening width of the depressed portions of the unevenness pattern 111a. Note that the diameter of the brush fibers can be measured from an image of the brush fibers obtained through a glass placed on the surface of the roller 2410 using an optical microscope. At this time, the fiber diameters of approximately 100 brush fibers are measured, the fiber diameter distribution is measured, and the average diameter is calculated.

As the transport member 224a moves and the roller 2410 rotates, the brush fibers of the roller 2410 are rubbed against the surface of the first base material 11a. As a result, the first particles borne by the brush fibers are densely arranged in the depressed portions of the unevenness pattern 111a on the surface of the first base material 11a.

FIG. 4B is a view schematically illustrating the configuration of a filling apparatus 24d in which an elastic material is used as the bearing material.

The filling apparatus 24d has the same configuration as that of the filling apparatus 24c, except that a roller 2411 having an elastic material is used instead of the roller 2410 having brush fibers. The roller 2411 is a roller having an elastic layer formed on its surface.

The elastic layer is made of an elastic material such as a rubber material comprising silicone rubber, acrylic rubber, nitrile rubber, urethane rubber, or fluorocarbon rubber. The surface shape of the elastic layer may be controlled by adding fine particles such as spherical resin to the elastic layer.

When the elastic layer has protruded portions on its surface, the size of the protruded portions of the elastic layer is set to be larger than that of the depressed portions of the unevenness pattern 111a. The size of the protruded portions of the elastic layer can be measured in the same manner as the fiber diameter of the brush fibers described above.

As the transport member 224a moves and the roller 2411 rotates, the elastic material on the surface of the roller 2411 is rubbed against the surface of the first base material 11a. As a result, the first particles borne by the elastic material are densely arranged in the depressed portions of the unevenness pattern 111a on the surface of the first base material 11a.

By using brush fibers or an elastic material as the bearing material as illustrated in FIGS. 4A and 4B, it is unnecessary to comprise magnetic particles in the filler. Furthermore, the configuration of the filling apparatus can be simplified. On the other hand, when magnetic particles are used as the bearing material as illustrated in FIG. 2B, the degree of freedom in determining the size and shape of the bearing material is higher than when brush fibers or an elastic material are used. Furthermore, when magnetic particles are used, the degree of freedom in the movement of the bearing material on the base material is high.

For these reasons, when magnetic particles are used as the bearing material, particles such as the first particles P1 can be more efficiently supplied onto the base material and more efficiently filled into the depressed portions on the base material. Furthermore, when magnetic particles are used as the bearing material, the bearing material can be replenished or replaced without interrupting the process even if the bearing material deteriorates in the middle of the process.

According to the method in which the particles are filled into the depressed portions by rubbing the bearing material having the particles borne thereon, a larger amount of dispersed particles can be supplied into the depressed portions compared with a method in which the particles are filled using a regulating member such as a blade, and the filling can be performed stably and densely. The advantage of this method becomes conspicuous as the particle diameter of the particles to be filled decreases, because the particles tend to agglomerate.

The particle size of the first particles P1 preferably ranges from 0.01 to 50 µm, more preferably ranges from 0.05 to 20 µm, and even more preferably ranges from 0.1 to 10 µm.

The first base material 11a, in which the depressed portions of the unevenness pattern 111a have been filled with the first particles P1 by the first filling apparatus 24a, is transported to the transfer unit 25a by the first belt apparatus 22a.

Here, as illustrated in FIG. 2A, the second belt apparatus 22b has drive rollers 221b and 222b, a pressing roller 223b, and a belt-shaped transport member 224b suspended between these rollers, similar to the first belt apparatus 22a. At this time, the pressing roller 223b rotates in a driven manner. In the transfer unit 25a, the pressing roller 223a of the first belt apparatus 22a and the pressing roller 223b of the second belt apparatus 22b face each other.

The second base material 11b is supplied from the second storage container 21b to the second belt apparatus 22b and transported in the direction indicated by arrow in FIG. 2A. The second base material 11b thus supplied is transported in synchronization with the transport timing of the first base material 11a to the transfer unit 25a. In the transfer unit 25a, the first particles P1 filled into the first base material 11a are transferred to the second base material 11b.

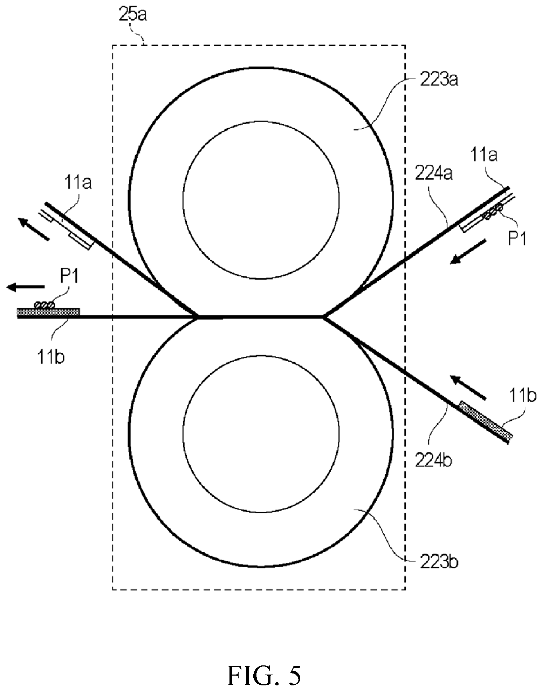

That is, the first base material 11a can be regarded as a transfer base material used to transfer the first particles P1 to the second base material 11b. Furthermore, the unevenness pattern formed on the surface of the first base material 11a can be regarded as a transfer unevenness pattern. Hereinafter, this transfer process will be described with reference to FIG. 5.

FIG. 5 is a view schematically illustrating the configuration of the transfer unit 25a. The transfer unit 25a includes the pressing roller 223a and the transport member 224a of the first belt apparatus 22a, and the pressing roller 223b and the transport member 224b of the second belt apparatus 22b. As described above, the pressing rollers 223a and 223b rotate in a driven manner and are in contact with each other through the transport members 224a and 224b. At least one of the pressing roller 223a and the pressing roller 223b is a soft roller having an elastic layer on its surface, and a nip portion is formed at the location where the two rollers are in contact with each other.

The first base material 11a, which has been filled with the first particles P1 by the first filling apparatus 24a, and the second base material 11b are transported at substantially the same speed by the respective transport members (224a and 224b), and enter the nip portion formed by the contact between the pressing rollers 223a and 223b. At the nip portion, the first particles P1 on the first base material 11a come into contact with the second base material 11b and are transferred to the second base material 11b.

The second base material 11b is a base material in which the attachment force to the first particles P1 is larger than that of first base material 11a to first particles P1. In other words, the attachment force of the first particles P1 to the second base material 11b is larger than that of the first particles P1 to the first base material 11a. As a result, at the nip portion, the first particles P1 on the first base material 11a are transferred to the second base material 11b.

The material of the second base material 11b is not particularly limited, and the same material as that of the first base material 11a can be used. Note that, similarly to the first base material 11a, the second base material 11b may be an individually separated base material, such as cut paper, a continuous base material wound in a roll shape, such as roll paper, or a continuous base material folded alternately, such as continuous paper.

The second substrate 11b has preferably undergone surface treatment to enhance adhesion in order to transfer the first particles P1 which come into contact with the second substrate 11b. For example, the second substrate 11b preferably comprises a holding portion of which a front surface is coated with a pressure sensitive adhesive.

Furthermore, preferably, a rear surface (a surface onto which the first particles P1 have not been transferred) of the second substrate 11b also comprises a holding portion of which a surface is coated with the same pressure sensitive adhesive as the front surface, and the rear surface is covered by a protective film or the like. Accordingly, when laminating a plurality of the substrates 11b, misalignment between the substrates can be prevented, and the positive electrode active material particles and the solid electrolyte particles between the substrates can be firmly fixed by being sandwiched between upper and lower surface (in the lamination direction). Accordingly, movement of particles during lamination, storage of laminates, conveyance, heat treatment, and pressurization can be suppressed and desired electrodes can be molded.

The pressure sensitive adhesive is not particularly limited and an acrylic pressure sensitive adhesive, a rubber-based pressure sensitive adhesive, or a silicon-based pressure sensitive adhesive can be used. Alternatively, a thermoplastic resin or a light-curing resin of which adhesive power varies due to external disturbance such as heat and light may be used.

The particle arranging apparatus 1 may include applying means such as a dispenser or an ink-jet head which applies the particle arranging apparatus to the surface of the second substrate 11b being conveyed. Alternatively, the substrate 11b to which the pressure sensitive adhesive has been applied in advance may be supplied from the second storage container 21b. In this case, preferably, the pressure sensitive adhesive is covered by a releasing film and includes releasing means which releases the releasing film when supplied.

While the type and the application amount of the pressure sensitive adhesive are appropriately adjusted depending of the shape and the material of the irregular pattern used, the particle size and the material of the first particles P1 and the second particles P2 to be described later, and the like, the adhesive power of the pressure sensitive adhesive is preferably greater than the adhesive power of the irregular pattern 111a. Adhesive power can be comparatively measured according to standard methods using a nanoindenter.

At the nip portion, the first particles P1 are restrained by the attachment force generated between the first particles P1 and the second base material 11b. When both the transport members 224a and 224b separate from each other after passing through the nip portion, the first particles P1 that were on the first base material 11a are transferred to the second base material 11b.

The second substrate 11b to which the first particles P1 have been transferred is conveyed to a setting position of the first settling apparatus 24b by the conveying member 224b.

The first settling apparatus 24b has the same configuration and functions as the first filling apparatus 24a (FIG. 2B). The difference is that the ratio of the first particles P1 to the support material S2 in the filler 241b is low. The support material S2 comprised in the filler 241b also serves to collect excess particles P1" that are not in contact with the second substrate 11b. Since the excess particles P1" are collected in the settling apparatus 24b as the settling step proceeds, the filler 241b comprises only a small proportion of the first particles P1. Keeping the ratio of the first particles P1 to the support material S2 in the filler 241b low enables settling of the first particles P1 and the collection of the excess particles P1" to be carried out over a long period of time.

When starting up the first settling apparatus 24b, only the support material S2 is preferably used as the filler 241b. This is because the purpose of the first settling apparatus 24b is to cause the first particles P1 on the second substrate 11b to settle into the holding portion 13 through rubbing with magnetic particles that constitute the support material S2.

The step of causing the first particles P1 to settle will be described with reference to the drawings.

The first settling apparatus 24b shares the same configuration as the first filling apparatus 24a (FIG. 2B) and stores the support material S2 comprising a plurality of magnetic particles as the filler 241a. The type and the particle size of the support material S2 may be the same as or may differ from those of the support material S1.

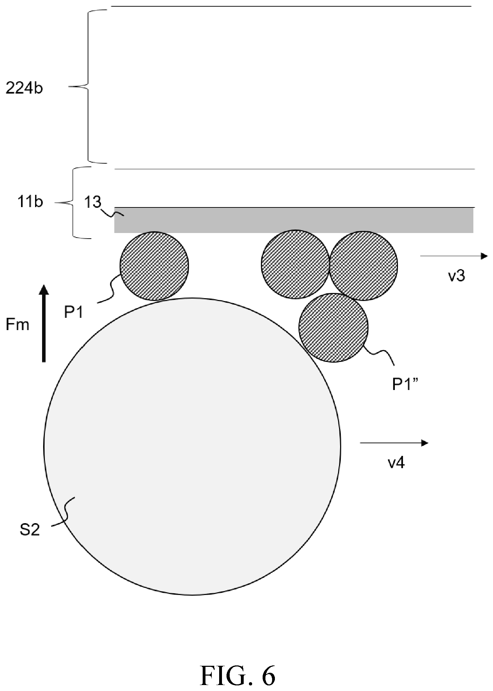

FIG. 6 is a schematic view of the support material S2 conveyed on the second substrate 11b. While the drawing only shows one magnetic particle for the sake of description, a magnetic chain including a plurality of magnetic particles may be formed.

The first particles P1 are arranged on the holding portion 13 on the second substrate 11b. The holding portion 13 is exposed in a non-transfer portion on the second substrate 11b where the first particles P1 are not arranged, effectively forming depressed portions constituted of the first particles P1. At this point, an opening diameter of the depressed portions in the irregular pattern formed on the second substrate 11b is preferably smaller than the average size of the support material S2. Accordingly, the support material S2 can be prevented from being arranged on the second substrate 11b.

The support material S2 comes into contact with the first particles P1 arranged on the holding portion 13 of the second substrate 11b, and is conveyed together with the second substrate 11b while maintaining a non-zero relative velocity with respect to the second substrate 11b and receiving a magnetic force in a direction perpendicular to the surface of the second substrate 11b (a direction of an arrow Fm in FIG. 6). Accordingly, the support material S2 is conveyed while rubbing against irregularities constituted of the first particles P1 arranged on the holding portion 13 of the second substrate 11b. At this point, the first particles P1 arranged on the holding portion 13 of the second substrate 11b are subjected to a force in a direction of settling toward the holding portion. When a pressure sensitive adhesive is used as the holding portion, the pressure sensitive adhesive is exposed to the surface from gaps between the particles as the particles settle.

The support material S2 can collect excess particles P1" not in contact with the second substrate 11b and rearrange (rotationally move) deformed particles with a small contact area with the second substrate 11b to form a dense pattern of the first particles P1.

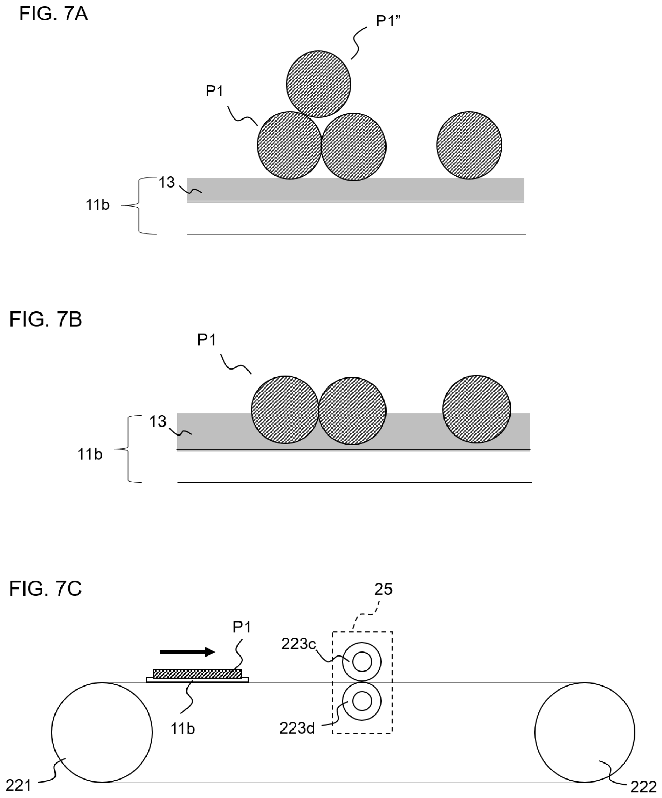

FIG. 7A is a schematic view of the second substrate 11b prior to the settling step, and FIG. 7B is a schematic view of the second substrate 11b after the settling step.

Prior to the settling step (FIG. 7A), the first particles P1 are arranged in contact with the surface of the holding portion 13. In addition, the excess particles P1" not in contact with the surface of the holding portion 13 are present on the first particles P1. After the settling step (FIG. 7B), the first particles P1 settle on the holding portion 13, a contact area between the particles and the holding portion increases, and the first particles P1 are rigidly constrained. Accordingly, the second particles P2 (to be described later) can be stably arranged.

Furthermore, the excess particles P1" can be collected by rubbing the excess particles P1" with the support material S2, and the excess particles P1" can be arranged in portions where the first particles P1 are not arranged on the holding portion 13.

While the ratio of the first particles P1 to the support material S2 increases as more excess particles P1" are collected, the ratio can be controlled according to a method similar to that of the first filling apparatus 24a described above. In other words, the ratio (weight ratio) of the first particles P1 to the support material S2 can be controlled using inductance sensors for measuring permeability which are common in electrophotographic apparatuses or patch density sensors which measure and predict reflectance density on a substrate or the like.

In addition, the support material S2 and the first particles P1 collected from the first settling apparatus 24b may be used as a filler supplied to the first filling apparatus 24a. In this case, the same magnetic particles as the support material S1 is preferably used as the support material S2. In addition, the ratio of the first particles P1 to the support material S2 of the filler 241b in the first settling apparatus 24b is more preferably controlled to be lower than the ratio of the first particles P1 to the support material S1 of the filler 241a in the first filling apparatus 24a.

Note that the settling step of the first particles P1 is not limited to being performed by the first settling apparatus 24b and may be performed using other apparatuses.

For example, FIG. 7C is a schematic view illustrating a settling apparatus 25. The particle settling apparatus 25 includes pressure rollers 223c and 223d, and the pressure roller 223d rotates in a driven manner. A soft roller including an elastic layer as a surface layer is preferably used as at least one of the pressure rollers 223c and 223d and, for example, a soft roller in which an elastic layer made of silicone rubber or fluororubber is provided on a surface of a stainless-steel core can be used. In addition, a heater (not illustrated) may be built into at least one of the pressure rollers 223c and 223d.

The substrate 11b having the first particles P1 arranged on a surface thereof is conveyed to a pressurizing portion between the pressure rollers 223c and 223d by a belt apparatus. When pressurized by the pressure rollers 223c and 223d, the first particles P1 arranged on the surface of the substrate 11b settles onto the holding portion 13 of the substrate 11b. At this point, settling of the first particles P1 onto the holding portion 13 of the substrate 11b may be facilitated by the heater. In addition, a heating source may be provided upstream of the particle settling apparatus 25 to heat the holding portion 13 of the substrate 11b.

Since the pressure roller 223c comes into contact with the first particles P1 arranged on the substrate, a surface of the pressure roller 223c is preferably coated with a material with good releasability such as fluorine to suppress adhesion of the particles. In addition, a cleaning mechanism for removing particles adhered to the pressure roller 223c may be provided. The first particles P1 arranged on the substrate 11b are more preferably pressurized in a state where the first particles P1 are covered by a protective material (not illustrated).

In this case, the protective material to be used is preferably a material having excellent mold releasing properties. A fluorine sheet is preferable when the protective material is a resin, and a nichrome foil is preferable when it is a metal. When the protective material is used, a removal mechanism (not illustrated) that removes the protective material is provided downstream of the particle settling apparatus 25 and upstream of the third filling device 24.

The particle settling apparatus 25 may also be a conventional pressurization apparatus. For example, pressurization may be performed using an isostatic pressing apparatus (CIP/HIP), a uniaxial pressing apparatus, or even using weights or magnets. In addition, when specific gravity of the particles is high, the particles may be allowed to settle under their own weight. In this case, settling of the particles is preferably promoted by storing the substrate in a heated environment such as an oven.

When storing the substrate on which particles have been arranged in a heated environment, a heating temperature and a storage time are appropriately adjusted according to physical properties (shape, particle size, specific gravity, tackiness, viscoelasticity, and the like) of the particles and the pressure sensitive adhesive used in the holding portion. If the heating temperature or the storage time is insufficient, the particles will not settle sufficiently, making it difficult for the pressure sensitive adhesive as the holding portion to become exposed to the surface from the gaps between the particles. On the other hand, if the heating temperature or the storage time is excessive, the particles become more likely to move in in-plane directions as they settle, causing denseness of the arranged particles to decrease significantly. Preferably, a state where the first particles P1 are densely arranged and are caused to settle in an efficient manner is maintained by adjusting the heating temperature to 20°C to 100°C using a heater or the like.

### (Step III and Step IV)

Step III and step IV are steps of arranging the second particles P2 (solid electrolyte particles) in portions where the first particles P1 (positive electrode active material) are not arranged in the holding portion on the resin substrate, and causing the first particles and the second particles to settle in the holding portion on the resin substrate. In step III and step IV, particles are arranged on the resin substrate using a particle arranging apparatus 2. Hereinafter, the particle arranging apparatus 2 will be described.

### [Particle Arranging Apparatus 2]

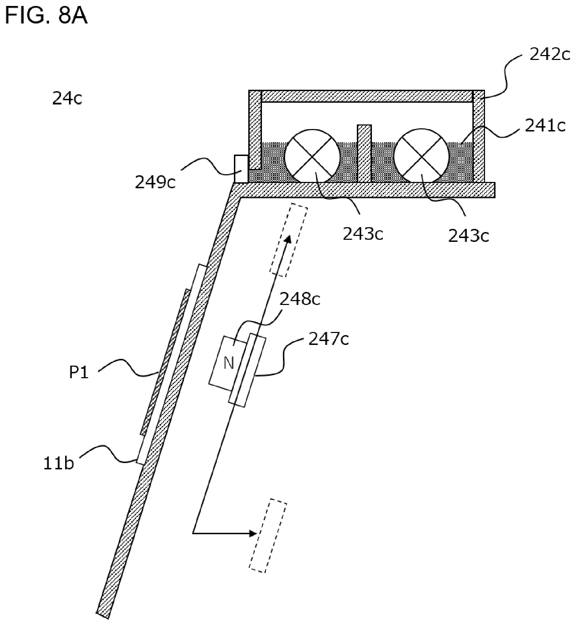

As a second filling apparatus 24c, for example, a simple apparatus which does not use a belt apparatus can be used. FIG. 8A represents an example of the apparatus. The second filling apparatus 24c includes a filler container 242c which stores a filler 241c, a stirring screw member 243c which stirs and conveys the filler 241c, a magnetic member 247c, a magnet 248c, and a restricting member 249c.

The filler container 242c stores the filler 241c. The filler 241c comprises the second particles P2 and a support material S3 which supports the second particles P2. The second particles P2 are solid electrolyte particles. The filler 241c is a mixture of a plurality of powders including a powder constituted of a plurality of second particles P2 and a powder constituted of a plurality of support materials S3. The type of the support material S3 may be the same as or may differ from those of the support materials S1 and S2. The support material S3 is appropriately selected according to the particle size and the material of the second particles P2 and the opening width of the pore portions described above.

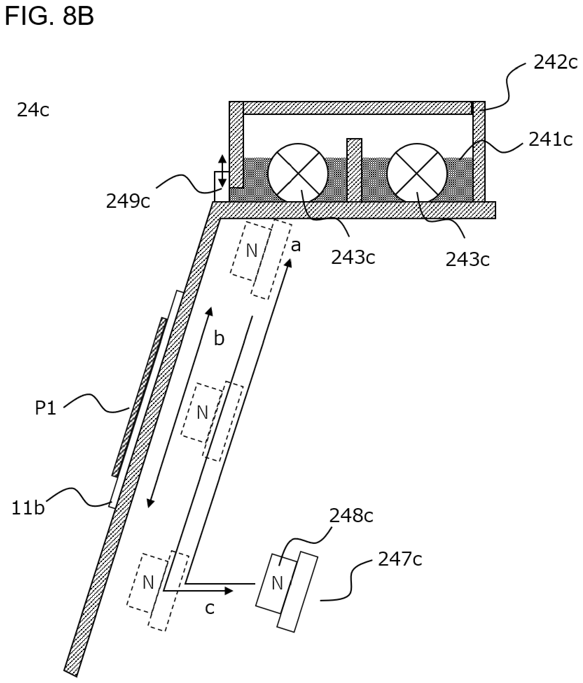

FIG. 8B is a schematic view illustrating an operation of the filling apparatus. The substrate 11b on which the first particles P1 have been arranged through step I and step II described above is fixed to the filling apparatus 24c by a substrate fixing member (not illustrated).

An appropriate amount of the filler 241c having been sufficiently stirred by the stirring screw member 243c is supplied due to the magnetic member 247c having moved from its home position (arrow a in FIG. 8B) and restriction provided by the restricting member 249c. The supplied filler 241c rubs against the substrate 11b as the magnetic member 247c reciprocates (arrow b in FIG. 8B).

After being rubbed a desired number of times, the magnetic member 247c moves to a distant home position where the magnetic force acting on the filler 241c on the substrate is sufficiently weakened (arrow c in FIG. 8B). Excess filler 241c supplied onto the substrate 11b falls downward by gravity and is collected in a recovery container (not illustrated). At this point, air blasts or vibrations are more preferably used.

Note that the method of rubbing the filler 241c against the substrate 11b is not limited to the method described above. The rubbing may be performed by fixing the magnetic member 247c and reciprocating the substrate 11b or both the magnetic member 247c and the substrate 11b may be moved so that the filler 241c rubs against the substrate 11b at a given relative velocity.

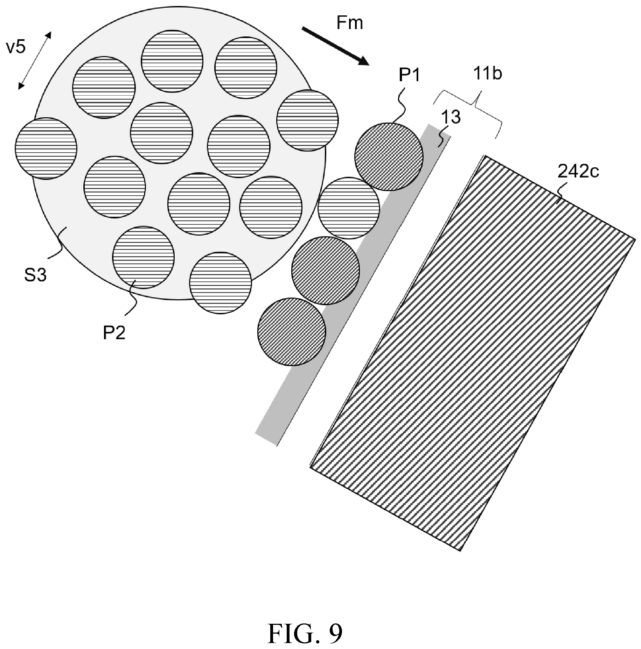

FIG. 9 is an enlarged view of a vicinity of the surface of the second substrate 11b in a filling process by the second filling apparatus 24c.

After step I and step II described above, an irregular pattern including a protruded portion formed by arranging the first particles P1 and a depressed portion where the first particles P1 are not arranged is formed on the second substrate 11b. The holding portion 13 is exposed in the depressed portion where the first particles P1 are not arranged on the second substrate 11b. In the filling process by the second filling apparatus 24c, the second particles P2 are arranged in the holding portion 13 on the surface of the second substrate 11b.

The filler 241c comes into contact with the irregular pattern on the second substrate 11b, and is conveyed together with the second substrate 11b while maintaining a non-zero relative velocity with respect to the second substrate 11b and receiving a magnetic force (arrow Fm in the drawing) in a direction perpendicular to the surface of the second substrate 11b. Accordingly, the second particles P2 supported by the support material S3 are conveyed while rubbing against the irregular pattern of the surface of the second substrate 11b.

In this case, an opening width of the depressed portion of the irregular pattern formed on the second substrate 11b is set to a size which allows the second particles P2 to come into contact with the depressed portion but prevents the support material S3 from coming into contact with the depressed portion. In other words, the opening width of the depressed portion of the irregular pattern formed on the second substrate 11b is preferably larger than a 50% cumulative particle size (median diameter) in a volume-based particle size distribution of the second particles P2. In addition, an opening diameter of the depressed portion is preferably smaller than the average size of the support material S3. In this case, the opening diameter of the depressed portion of the irregular pattern is preferably an opening diameter in a transverse direction of the depressed portion and more preferably a maximum opening diameter in the transverse direction of the depressed portion. Accordingly, only the second particles P2 in the filler 241c come into contact with the depressed portion in a selective manner.

The second particles P2 that have come into contact with the depressed portions are strongly restrained by a physical restraining force due to the structure of the unevenness pattern, or by an electrostatic attachment force or an adhesive force with respect to the structural materials (here, the first particles P1) constituting the second base material 11b and the unevenness pattern, and are separated from the bearing material S3. Note that in FIG. 9, the second particles P2 are borne on the surface of the bearing material S3 for explanatory purposes, however, when the filler 241c is agitated, supplied, or transported, some of the particles P2 may not be borne on the bearing material S3.

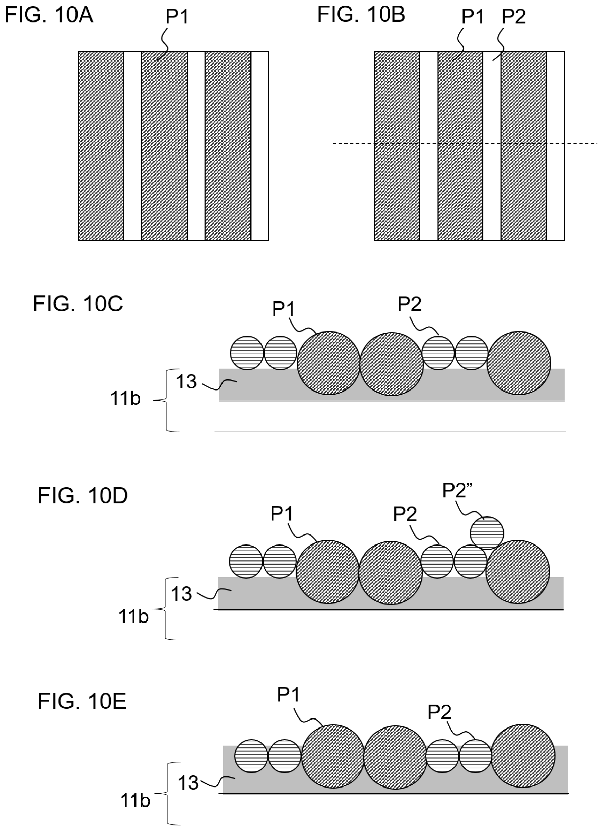

FIG. 10A is a diagram schematically showing the second substrate 11b after the first particles P1 have been transferred by the transfer portion 25a and is a view of the second substrate 11b from a direction perpendicular to the substrate surface. As shown in FIG. 10A, a line pattern formed by an array of regions in which the first particles P1 are linearly arranged is formed on the second substrate 11b.

While the first particles P1 are densely arranged in the linear regions, the first particles P1 are not arranged in other portions (white portions in FIG. 10A) and the surface of the second substrate 11b is exposed instead. The linear regions where the first particles P1 are held are referred to as first pattern portions. In addition, the linear regions where the second particles P2 are held and positioned at the gaps between the first pattern portions are referred to as second pattern portions.

FIG. 10B is a diagram schematically showing the second substrate 11b after the second particles P2 have been filled by the second filling apparatus 24c and is a view of the second substrate 11b from the direction perpendicular to the substrate surface. As shown in FIG. 10B, the second particles P2 are densely arranged in regions where the first particles P1 are not arranged. In addition, the first particles P1 and the second particles P2 are also densely arranged in boundary portions between regions where the first particles P1 are arranged and regions where the second particles P2 are arranged. FIG. 10C is a cross-sectional schematic view of the substrate and particles arranged on the substrate at a position indicated by a dashed line in FIG. 10B. The first particles P1 and the second particles P2 are arranged in the holding portion 13 of the second substrate 11b.

Note that particles can also be filled into the slight gaps between the first particles P1 under the same method. In this case, by using a filler comprising particles having a particle diameter corresponding to the gaps between the first particles P1, it is possible to fill the particles in the same manner, thereby enabling the formation of an even denser thin film.

The second filling apparatus 24c can be used in the settling step of the first particles P1 and the second particles P2 in step IV. At this point, the support material S2 is preferably used as the filler 241c in a similar manner to the settling step of the first particles P1 in step II described earlier.

FIG. 10D is a schematic view of the second substrate 11b prior to the settling step in step IV, and FIG. 10E is a schematic view of the second substrate 11b after the settling step. Prior to the settling step (FIG. 10D), the second particles P2 are arranged in contact with the holding portion 13, and excess particles P2" not in contact with the holding portion 13 are present on the second particles P2. After the settling step (FIG. 10E), the first particles P1 and the second particles P2 settle on the holding portion 13, a contact area between the particles and the holding portion increases, and the first particles P1 and the second particles P2 are rigidly constrained. Accordingly, the movement of particles is suppressed during storage and conveyance of the substrate 11b and a positive electrode precursor (to be described later) in which the substrate 11b is laminated on a base 14. In addition, the movement of particles is also suppressed during heat treatment and pressurization of the positive electrode precursor (to be described later) and desired electrodes can be molded.

After step IV and prior to step V (to be described later), third particles P3 may be further arranged on the second substrate 11b. The third particles P3 can be arranged using the particle arranging apparatus 1 or the particle arranging apparatus 2 due to the holding portion 13 which is exposed between the particles after the settling step and the irregularities formed by the first particles P1 and the second particles P2. The third particles P3 may be the same as the second particles P2 or may be different solid electrolyte particles or active material particles. When using the same solid electrolyte particles as the second particles P2, the solid electrolyte particles are preferably used by skewing a particle size distribution toward smaller particle sizes.

In addition, arrangement of particles and the settling step may be repeated to arrange a plurality of particles such as the third particles P3, fourth particles P4, and fifth particles P5 over a plurality of stages.

While the arrangement and settling of the first particles P1 are performed by the particle arranging apparatus 1 and the arrangement and settling of the second particles P2 are performed by the particle arranging apparatus 2 in the description given above, the particle arranging apparatus used in each step is not limited and either particle arranging apparatus may be used. For example, the first particles P1 may be arranged by the particle arranging apparatus 2. In this case, a separately-fabricated PDMS mold or a resin film mold can be fixed and used in place of the substrate 11b shown in FIG. 8A. The first particles P1 having filled the depressed portion of the mold may be transferred to the second substrate 11b using a transfer roller similar to that of the particle arranging apparatus 1, or the substrate 11b may be laminated onto the mold, packaged in a vacuum-sealed bag (Co-pack), and pressurized and transferred using an isostatic pressing apparatus.

In the particle arranging apparatuses 1 and 2, a coverage rate of the resin substrate surface by the particles (particles P1, P2, and the like) arranged on the substrate 11b is preferably equal to or higher than 60%, more preferably equal to or higher than 70%, and even more preferably equal to or higher than 80%.

In the present disclosure, the coverage rate of the resin substrate surface refers to a percentage of an area (area %) of the resin substrate surface that is covered by active material particles and solid electrolyte particles relative to the total area of the resin substrate surface. The coverage rate of a substrate by a particle layer can be measured by photographing a region where the particle layer is formed using an optical microscope from a vertical direction relative to the substrate, and then calculating area ratios of the particles P1 and P2 within the region using image processing software.

### (Step V)

Step V is a step of laminating the resin substrate (second substrate 11b) on which particles have been arranged through the step described above onto the base 14. In other words, step Vi is a step of molding the positive electrode precursor which is a laminate.

The number of resin substrates to be laminated is determined based on a desired battery capacity. In addition, the base 14 preferably doubles as a current collector and known current-collecting materials can be used. As the base 14, precious metals such as gold foil, platinum foil, and silver foil, and known current-collecting materials such as aluminum foil and stainless steel foil can be used.

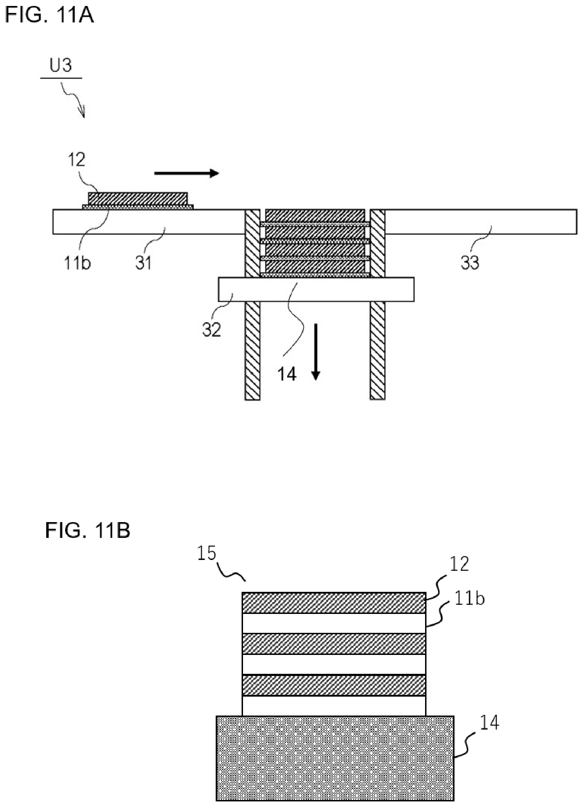

FIG. 11A is a diagram schematically showing a configuration of a positive electrode precursor molding apparatus. The positive electrode precursor molding apparatus includes a conveying apparatus 31 which conveys the substrate 11b on which a particle layer (positive electrode active material layer) 12 including the first particles P1 and the second particles P2 is formed and a stage 32 capable of early dismissal and movement in a vertical direction via an actuator (not illustrated).

The conveying apparatus 31 receives the substrate 11b including the particle layer 12 formed using the particle arranging apparatus and conveys the substrate 11b to the stage 32. Examples of the conveying apparatus 31 capable of conveying the substrate 11b include a conveyor belt, a roller, and a robotic arm.

Once the substrate 11b is conveyed to the stage 32 by the conveying apparatus 31, the stage 32 moves in the vertical direction by the thicknesses of the substrate 11b and the particle layer 12. By repeatedly conveying the substrate 11b using the conveying apparatus 31 and moving the stage 32, a plurality of substrates 11b, each having the particle layer 12 formed thereon, are laminated onto the base 14 and the positive electrode precursor 15 is molded.

At this point, a pressure sensitive adhesive is preferably applied to a surface on a rear side of the substrates 11b on which the particle layer 12 has been formed. The pressure sensitive adhesive enables the substrates 11b to adhere to each other, increases strength of the structure, and suppresses misalignment between the substrates even after step V. Furthermore, because the particle layer 12 between the substrates 11b is sandwiched between upper and lower pressure sensitive adhesives, the particles are rigidly held during the steps described later and during storage of the positive electrode precursor and misalignment can be suppressed. Note that the pressure sensitive adhesive can be applied using an applying apparatus (not illustrated) prior to lamination, or a pre-applied substrate may be used, in which case a protective film covering the applied surface is peeled off prior to lamination.

Note that a static eliminating step to remove static electricity from the substrate is preferably provided immediately before the positive electrode precursor 15 is molded. The particle layer 12 and the substrates 11b formed using particle arranging apparatuses are prone to becoming charged, and when the substrates 11b are laminated, electrostatic repulsive or attractive forces arise between the substrates 11b. Consequently, during lamination in step V, the substrates may be laminated while being misaligned or may develop wrinkles, making it difficult to obtain the desired positive electrode precursor. In the static eliminating step, a static elimination blower or the like is preferably used to eliminate static electricity in a contactless manner.

In addition, a deaerating step for deaerating the positive electrode precursor to remove air between the substrates is preferably provided after the positive electrode precursor 15 is molded. In the deaerating step, deaeration is preferably performed using vacuum packaging machines, vacuum ovens, or the like.

Furthermore, a pressurizing step may be provided after the deaerating step. The pressurizing step is preferably performed by general pressurizing means such as vacuum degassing, isostatic pressing, and using hydraulic presses or roller presses. Among these means, pressurization is preferably performed by combining vacuum degassing and isostatic pressing.

FIG. 11B is a schematic view of a cross section of the positive electrode precursor 15 manufactured by the method (step I to step V) for manufacturing a positive electrode precursor described above. The positive electrode precursor is a structure including the base 14 and the substrate 11b on which the particle layer 12 has been molded. The positive electrode precursor can be further described as a structure in which the substrate 11b on which the particle layer 12 including positive electrode active material particles and solid electrolyte particles are arranged is laminated on the base 14.

One or a plurality of positive electrode precursors may be optionally selected and laminated according to a desired battery capacity. In other words, one positive electrode precursor may be used or a plurality of positive electrode precursors may be used laminated. In addition, as shown in FIG. 11B, the substrate 11b and the particle layer 12 may be repeatedly laminated in this order from the side of the base 14 or the order may be reversed so that the particle layer 12 and the substrate 11b are repeatedly laminated in this order from the side of the base 14. Furthermore, the same layers may be repeatedly laminated such as the substrate 11b, the particle layer 12, the particle layer 12, and the substrate 11b.

### (Second Step)

The second step (S101 in FIG. 1A) is a laminating step of laminating a first material layer comprising the active material particles that form the positive electrode active material layer and a second material layer comprising the solid electrolyte particles that form the electrolyte layer, and forming a laminate.

The positive electrode precursor prepared in the first step can be used as the first material layer comprising the active material particles that form the positive electrode active material layer. In the second step, after the first step of preparing the positive electrode precursor, the positive electrode precursor prepared in the first step and a solid electrolyte to form the electrolyte layer are laminated inside a die to be used in spark plasma sintering. In other words, the laminating step preferably includes a step of enclosing the laminate with a dielectric body. Hereinafter, the step will be described in specific terms.

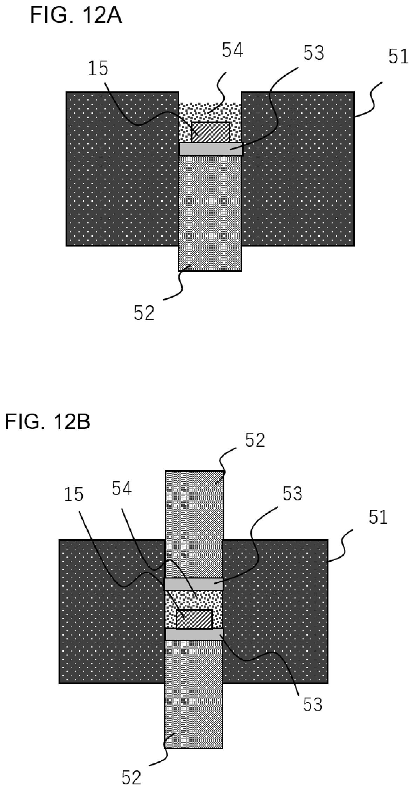

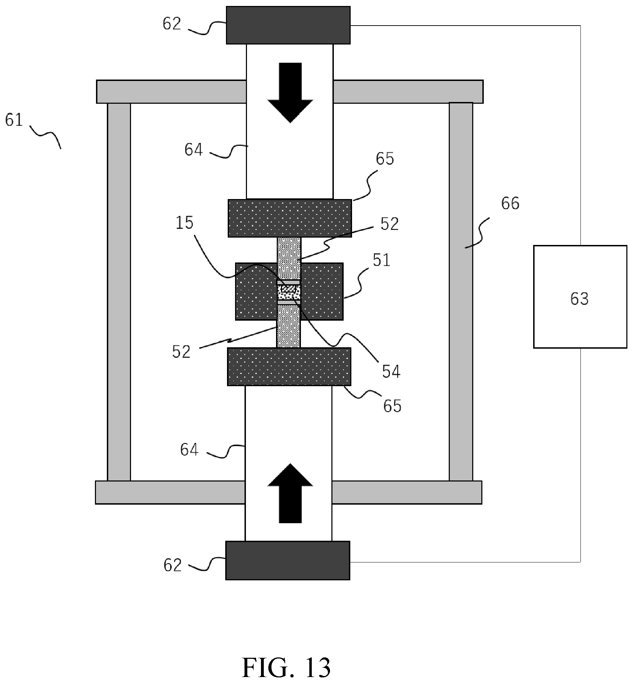

FIGs. 12A and 13B are schematic views illustrating the lamination in a die. As shown in FIG. 12B, the die 51 has a cylindrical shape with a hollow interior configured to accommodate cylindrical punches 52 inserted from above and below in the lamination direction to apply pressure.

As shown in FIG. 12A, the punch 52 is inserted into the die 51 from below in the lamination direction, a carbon sheet 53 is laminated on the punch 52, and the positive electrode precursor 15 prepared in the first step is laminated on the carbon sheet 53. The positive electrode precursor 15 is laminated so that a surface of the base 14 on which the substrate 11b is not laminated comes into contact with the carbon sheet 53. In other words, the active material particles and the solid electrolyte particles described above are arranged on an upper-side (a side not in contact with the carbon sheet 53) surface of the positive electrode precursor 15 laminated on the carbon sheet 53. The base 14 of the positive electrode precursor has been processed in advance to a size that fits into the cylinder.

An appropriate amount of the solid electrolyte particles 54 is supplied from above the laminated positive electrode precursor 15, and the solid electrolyte particles 54 are subjected to pressure while being evenly spread to form a surface. The formation of the surface is preferably performed by inserting the punch 52 from above in the lamination direction.

The carbon sheet 53 is laminated on the formed surface and the punch 52 is inserted from above in the lamination direction (FIG. 12B). A release material may be inserted between the carbon sheet 53 and each layer of the laminate including the positive electrode precursor and the solid electrolyte. As the release material, for example, gold foil or platinum foil can be used. The materials of the die and the punch are not particularly limited and commercially available dies made of graphite or cemented carbide can be used. A die and a punch made of graphite are preferably used from the perspective that atmosphere control need not be performed in a third step to be described later.

A shaking step may be provided after the second step. Applying vibration using a commercially available shaker (such as the compact vibration unit manufactured by Sansho Industry Co., Ltd.) causes the solid electrolyte particles 54 within the die to fill the die more uniformly, enabling dense molding.

### (Third Step)

The third step (S103 in FIG. 1A) is a pressurization electrification step of applying positive pressure and an alternating voltage in a lamination direction to the laminate formed by the second step to form a composite. The pressurization electrification step preferably includes a step of heating the laminate. In the present disclosure, spark plasma sintering is executed as the pressurization electrification step. Hereinafter, the step will be described in specific terms.

FIG. 13 is a schematic configuration diagram of a spark plasma sintering apparatus 61 used in the third step. The spark plasma sintering apparatus 61 primarily includes an electrode 62, a DC pulse power supply 63 which supplies a pulse current, a pressurizing shaft 64 which electrifies and pressurizes a sample, a spacer 65, and a chamber 66.

In addition, the pressurization can be controlled in a direction of an arrow in the drawing by a pressurization mechanism and a control portion (both not illustrated). The pressure during pressurization preferably ranges from 5 to 800 MPa. Furthermore, temperature can be adjusted using a temperature sensor or a control portion (both not illustrated). The sintering temperature is preferably set to 200 to 1000°C.

The sample is arranged in the die described above in a laminated state such that the sample is held between the upper spacer 65 and the lower spacer 65. Note that the die is oriented so that the base 14 of the positive electrode precursor is arranged on an upper side relative to the substrate 11b and the solid electrolyte within the die. The upper side refers to a side of the electrode to which a positive voltage (current) is applied (the upper electrode 62 in FIG. 13). In other words, the die is arranged so that the surface of the solid electrolyte particles formed in the second step is positioned on a lower side in FIG. 13.

Spark plasma sintering is executed with respect to the sample. The spark plasma sintering is preferably performed in an atmospheric environment. Alternatively, the spark plasma sintering may be performed in an Ar, N₂, or Ar-H₂ atmosphere. The sintering time preferably ranges from 1 to 30 minutes.

By performing sintering in the third step, an electrolyte layer with ionic conductivity is formed.

### (Fourth Step)

The fourth step (S104 in FIG. 1A) of extracting the composite from inside the die after spark plasma sintering and performing post-processing will be described.

The sample is removed from the die and a craft knife or the like is used to remove the carbon sheet and the release material adhering to both surfaces of the sample. In particular, since the carbon sheet adhered to the surface on the side of the solid electrolyte (opposite side to the base 14) must be reliably removed, the surface is further sanded by an abrasive sheet or the like to remove the carbon sheet. While the base 14 may become solely detached from the sample during the fourth step, in such a case, the sample need only be laminated during battery assembly (to be described later) so that the positive electrode surface comes into contact with the positive electrode current collector.

### (Fifth Step)

The fifth step (S105 in FIG. 1A) is a sintering step of sintering the composite in an oxygen-containing atmosphere to form an electrode composite. Specifically, the fifth step is a step of executing re-sintering to adjust a composition and a shape of the positive electrode active material. Hereinafter, the step will be described in specific terms.

In the spark plasma sintering in the third step (S103 in FIG. 1A) described earlier, the positive electrode active material is readily reduced by reducing gases generated when the resin substrate decomposes and by the graphite die. In particular, positive electrode active materials containing Co, typically, lithium cobalt oxide (LiCoO₂), so-called ternary NMCs in which some of the Co in LiCoO₂ is substituted with Ni or Mn, lithium cobalt phosphate (LiCoPO₄), and the like are prone to reduction. Since the composition of the positive electrode active material changes due to reduction, re-sintering is executed in the fifth step to oxidize the positive electrode active material and restore its original composition.

In the spark plasma sintering in the third step described above, reducing gases are generated when the resin substrate decomposes. Conceivably, as the generated gas comes into uniform contact with the positive electrode active material particles, the positive electrode active material particles are reduced to substances such as cobalt oxide and cobalt, and small-diameter particles which tend to become predominantly distributed will be predominantly distributed on the side of the base 14. Further conceivably, re-sintering in the fifth step causes predominantly-distributed small-diameter particles (cobalt oxide and cobalt) to be generated as second active material particles (lithium cobalt oxide) by oxidation.

The reasons for this are thought to be as follows.

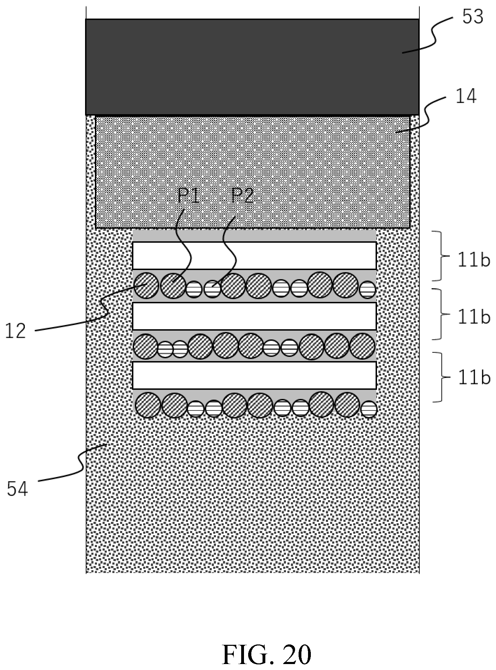

FIG. 20 is a schematic view showing the interior of the die during spark plasma sintering. Heating (up to 450°C) during spark plasma sintering gradually removes the substrate 11b while generating reducing gas (CO). In addition, the lithium cobalt oxide (P1) in the particle layer 12 is reductively decomposed by the surrounding graphite die. On the other hand, the solid electrolyte particles (P2) are sintered together with the solid electrolyte particles 54. While lithium cobalt oxide (P1) is converted into cobalt oxide or cobalt through reductive decomposition and is primarily present as primary particles with a porous structure, some of the particles are conceivably predominantly distributed on the side of the base 14 (current collector) in even smaller sizes. Although the reason for the uneven distribution is unclear, pulsed current (voltage), temperature distribution, particle shape, particle weight, and pore distribution may be contributing factors.

Conceivably, the re-sintering performed in the fifth step oxidizes the small-diameter particles having been predominantly distributed on the side of the base 14 in the third step which are then generated as the second active material particles. In other words, performing the fifth step enables the positive electrode active material layer to be configured such that second active material particles with a minor axis equal to or less than 130 nm and an aspect ratio of the major axis to the minor axis equal to or greater than 2 are present inside the positive electrode active material layer. The particle size and the shape of the second active material particles can be controlled by adjusting conditions such as the sintering temperature and the sintering time during the re-sintering.

The re-sintering is preferably performed using a muffle furnace or a tubular furnace. The sintering temperature is preferably set to 400°C to 800°C. In addition, the sintering time preferably ranges from 0.1 to 10 hours. Sintering is preferably performed in an atmosphere containing oxygen such as air or an oxygen atmosphere. Performing re-sintering under the conditions described above enables the positive electrode active material layer to be configured such that second active material particles with a minor axis equal to or less than 130 nm and an aspect ratio of the major axis to the minor axis equal to or greater than 2 are present inside the positive electrode active material layer.

The first step (S101 in FIG. 1A) to fifth step (S105 in FIG. 1A) described above enable the electrode composite 17 in which a positive electrode layer and an electrolyte layer are laminated to be manufactured. In other words, the electrode composite 17 is an electrode composite including a positive electrode active material layer and an electrolyte layer.

### <Method for Manufacturing Secondary Battery>

Secondary batteries can be manufactured using the electrode composite described above (electrode composite 17). A secondary battery comprises an electrode composite, a negative electrode, and a current collector.

A method for manufacturing a secondary battery is not particularly limited and a plurality of methods may be used. The method for manufacturing a secondary battery preferably includes a step of manufacturing an electrode composite according to the method described above and a step of laminating the manufactured electrode composite, a negative electrode, and a current collector. Hereinafter, an example of a manufacturing method will be described.

A negative electrode is molded on a surface on the side of the electrolyte layer (a surface on an opposite side to the positive electrode surface) of the electrode composite 17. As the negative electrode, a standard negative electrode commonly used in conventional secondary batteries can be used. A metal foil or the like may be laminated onto the electrode composite, and negative electrode active material particles may be arranged on the electrode composite to form a negative electrode active material layer.

In other words, as the electrode composite, an electrode composite including a negative electrode active material layer in contact with the electrolyte layer can also be used. The secondary battery can comprise an electrode composite including a negative electrode active material layer in contact with the electrolyte layer, a first current collector in contact with a positive electrode active material layer, and a second current collector in contact with the negative electrode active material layer.

Hereinafter, a method of molding a negative electrode will be described.

When a metal such as lithium metal or indium is used as the negative electrode, the metal foil may be laminated directly onto the electrode composite 17 or may be laminated via a polymer electrolyte as a buffer layer. Alternatively, a metal negative electrode may be molded on the electrode composite 17 by a vacuum process such as sputtering or vapor deposition.

When negative electrode active material particles such as black lead, silicon (Si), and lithium titanate (LTO) are used as the negative electrode, a negative electrode precursor can be manufactured using a method similar to the method for manufacturing the positive electrode precursor described earlier. In other words, the negative electrode precursor is obtained by preparing a resin substrate for the negative electrode on which at least negative electrode active material particles have been arranged and laminating the resin substrate onto the base 14.

The particle layer formed on the negative electrode precursor may be a particle layer comprising negative electrode active material particles and solid electrolyte particles or may be a particle layer comprising only negative electrode active material particles. In addition, the particle layer may include negative electrode active material particles of a plurality of types. The negative electrode can be obtained by subjecting the negative electrode precursor to a heat treatment to remove the resin substrate. The negative electrode can be laminated onto the electrode composite in a similar manner to when using metal foil.

In addition, the negative electrode may be formed by laminating a resin substrate on which the particle layer described above is formed onto a surface on the side of the electrolyte layer (a surface on an opposite side to the positive electrode surface) of the electrode composite 17 and performing a heat treatment to remove the resin substrate. Lamination of the resin substrate on which a particle layer for the negative electrode has been formed can be performed with respect to the electrode composite 17 after the fifth step (S105 in FIG. 1A), the electrode composite 17 after the fourth step (S104 in FIG. 1A), or the electrode composite 17 after the second step (S102 in FIG. 1A).

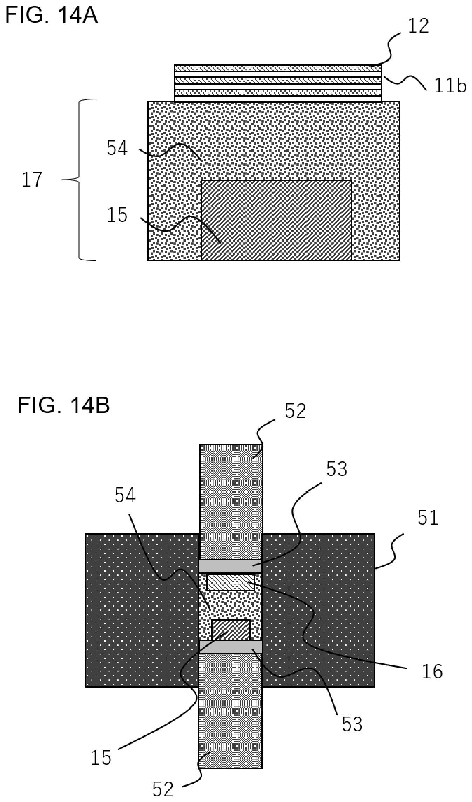

FIG. 14A is a schematic view of a cross section showing a plurality of layers of the substrate 11b on which the particle layer 12 for a negative electrode has been arranged on the electrode composite 17 after the fourth step (S104 in FIG. 1A).

FIG. 14B is a schematic view of a cross section showing the negative electrode precursor 16 laminated on the electrode composite 17 after the second step (S102 in FIG. 1A). The negative electrode precursor 16 is a structure in which a resin substrate and the base 14 have been laminated in order from the side opposing the positive electrode precursor 15. One resin substrate may be used or a plurality of resin substrates may be laminated. Furthermore, a bipolar laminate and a secondary battery can be manufactured by laminating the substrates 11b for the positive electrode and the negative electrode via the solid electrolyte particles 54 onto both surfaces of the base 14 that doubles as an electrode current collector. When a secondary battery is manufactured according to the method described above, since the negative electrode can be molded simultaneously during the heat treatment for manufacturing the electrode composite 17, the number of heat treatment steps can be reduced. In addition to the methods described above, the negative electrode may also be molded according to conventional negative electrode molding methods such as a coating process.

The manufactured members can be laminated in the order of the positive electrode current collector, the positive electrode, the electrolyte, the negative electrode, and the negative electrode current collector to manufacture a laminate battery in which the members are enclosed in a laminate film or a coin battery in which the members are enclosed in a coin case.

### EXAMPLES

The present disclosure is described in more detail below by using the Examples, but the present disclosure is not limited to these Examples. In the following Examples, number of parts is on a mass basis unless specifically indicated otherwise.

The positive electrode active material particles and the solid electrolyte particles used in an example and a comparative example will now be described.

Lithium cobalt oxide (LiCoO2: CellSeed C-5H) manufactured by Nippon Chemical Industrial Co., Ltd. was used as the positive electrode active material particles.

Solid electrolyte particles with the composition Li_{5.9}Yb_{0.81}La_{0.09}Zr_{0.1}(BO₃)₃ were synthesized according to the method described in Japanese Patent Application Laid-open No. 2022-130301. Specifically, Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), La₂O₃ (manufactured by Kishida Chemical), and ZrO₂ (manufactured by Nippon Denko Co., Ltd.) were prepared as raw materials for the solid electrolyte. The raw materials were weighed in specific stoichiometric proportions to achieve a post-sintering composition of Li_{5.9}Yb_{0.81}La_{0.09}Zr_{0.1}(BO₃)₃, and then mixed using a mortar and pestle. The mixed powder was cold uniaxial-pressed using the hydraulic press SSP-10A manufactured by Shimadzu Corporation and heat-treated in an atmospheric environment. The heating temperature was set to 650°C and the holding time was set to 720 minutes. The sintered body was ground using a mortar and pestle to synthesize the solid electrolyte powder. The synthesized solid electrolyte was processed in a P-7 planetary ball mill (manufactured by Fritsch Japan Co., Ltd) using 5-mm diameter zirconia beads at 370 rpm for 100 hours to produce solid electrolyte particles.

Using the positive electrode active material particles and the solid electrolyte particles described above, an electrode composite was fabricated according to the method described above. Specific steps were as follows.

### (First Step)

2 µm-thick polyethylene terephthalate (PET) was used as the substrate 11b. An acrylic pressure sensitive adhesive was applied to both surfaces of the substrate 11b to a thickness of 1.5 µm, and the holding portion 13 was formed. Positive electrode active material particles P1 and solid electrolyte particles P2 were arranged and caused to settle onto the holding portion 13 according to the methods described in steps I to IV described above.

Pt foil was used as the base 14. Three substrates 11b in which the positive electrode active material particles P1 and the solid electrolyte particles P2 were held by the holding portion 13 were laminated onto the base 14 according to the method described in step V described above to produce a positive electrode precursor. The positive electrode active material particles P1 and the solid electrolyte particles P2 were rigidly held in the up-down direction between the laminated substrates 11b. In addition, the substrates 11b were rigidly laminated onto the base 14 with high precision. The positive electrode precursor was prepared by the steps described above.

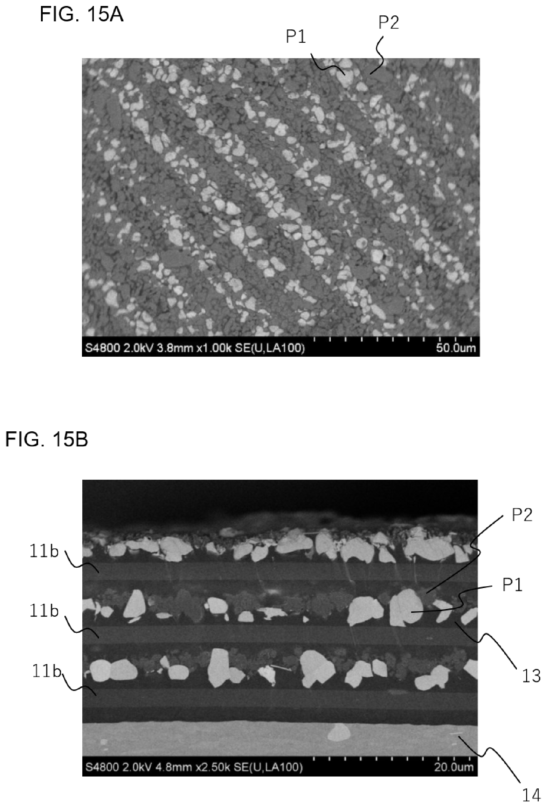

FIGs. 15A and 15B are SEM images of the positive electrode precursor prepared in the first step (S101 in FIG. 1A). FIG. 15A is an image taken from above the substrate 11b (the side where particles are arranged), and FIG. 15B is a sectional image of the substrate 11b. The positive electrode active material particles P1 were linearly arranged on the substrate 11b, and the solid electrolyte particles P2 were arranged so as to fill the gaps between the positive electrode active material particles P1 (FIG. 15A). During lamination, the substrates 11b were laminated such that the lines formed by the positive electrode active material particles P1 did not overlap between the substrates 11b. This was done to ensure that the electronic conduction of the positive electrode active material particle P1 and the ionic conduction of the solid electrolyte particles P2 were not interrupted in the lamination direction.

The positive electrode active material particles P1 on the substrate 11b were positioned more toward the side of the base 14 (downward in FIG. 15B) relative to the solid electrolyte particles P2. This was because the positive electrode active material particles P1 were caused to settle onto the holding portion 13 in step II (T102 in FIG. 1B) of the method for manufacturing a positive electrode precursor. This was also because the positive electrode active material particles P1 used in the Example were heavier than the solid electrolyte particles P2.

### (Second Step)

In the second step (S102 in FIG. 1A), a cylindrical graphite die (diameter 10 mm) was used as the die 51, and a cylindrical graphite punch (diameter 10 mm) was used as the punch 52. Inside the die, a laminate was formed by laminating the carbon sheet 53, the positive electrode precursor 15 prepared in the first step, the solid electrolyte particles 54 (200 mg), a release material (gold foil), and the carbon sheet 53 according to the method described above (S102 in FIG. 1A). As the carbon sheet, a 0.2 mm-thick commercially available product was used.

As the solid electrolyte particles, the same solid electrolyte particles as in the first step were used. The solid electrolyte particles 54 are particles that form an electrolyte layer in an electrode composite.

### (Third Step)

The laminate was subjected to a pressurization electrification step. In the present example, spark plasma sintering including a step of heating the laminate was performed as the pressurization electrification step. The spark plasma sintering was performed in an atmospheric environment (in chamber 66). The sintering temperature was set to 600°C, the sintering time (holding time at 600°C) was set to 5 minutes, and pressure was set to 30 MPa.

### (Fourth Step)

After the third step, the composite (the electrode composite 17 in which the positive electrode active material layer and the electrolyte layer are laminated) was extracted from inside the die.

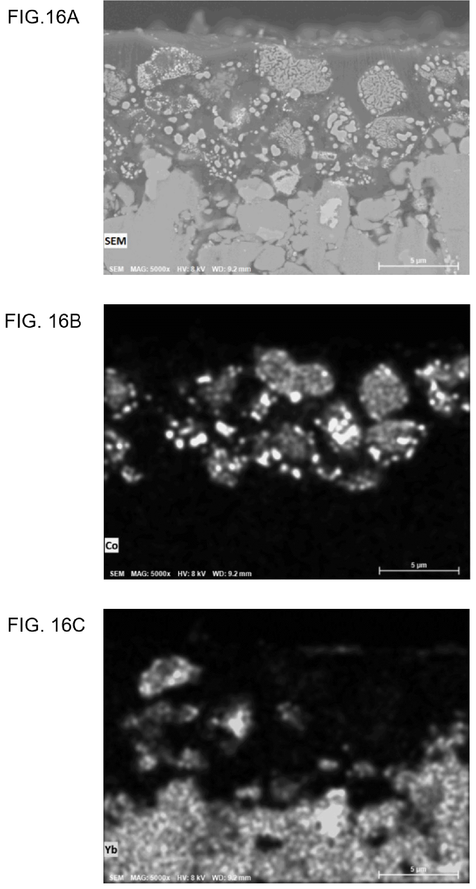

FIG. 16 shows a sectional SEM image and EDX images of the electrode composite 17 in which the positive electrode layer and the electrolyte layer are laminated and which has been extracted from the die in the fourth step (S104 in FIG. 1A). FIG. 16A is a sectional SEM image of a positive electrode layer of the electrode composite 17. FIG. 16B is an EDX image of cobalt (Co) contained in the positive electrode active material particles in the positive electrode layer of the electrode composite 17. FIG. 16C is an EDX image of ytterbium (Yb) contained in the solid electrolyte particles in the positive electrode layer of the electrode composite 17.

As shown in FIGs. 16A to 16C, the substrate 11b was not observed in sheet form, and it was confirmed that the resin substrate had disappeared during the third step. In the positive electrode layer of the electrode composite 17 after the third step, clusters of particles containing Co and clusters of particles containing Yb were arranged, and materials containing carbon, oxygen, and the like were present so as to fill the gaps between the clusters.

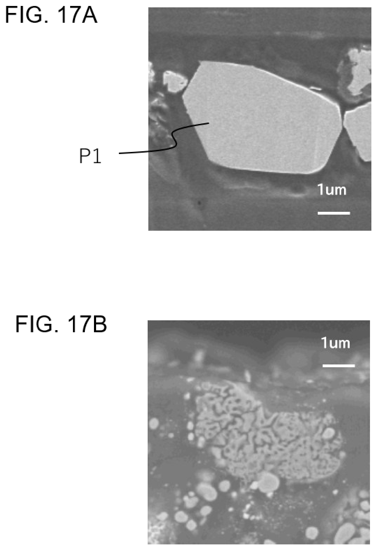

FIG. 17A is a sectional SEM image of the positive electrode active material particles (LiCoO₂) in the positive electrode precursor. FIG. 17B is a sectional SEM image of the positive electrode active material particles in the laminate after the third step, having been extracted from the die.

The positive electrode active material particles prior to the spark plasma sintering (FIG. 17A) retained the morphology of the raw material, CellSeed C-5H, both within the particles and on surfaces thereof. In contrast, the positive electrode active material particles after the spark plasma sintering (FIG. 17B) had transformed into a so-called porous structure containing voids within the particles. Furthermore, X-ray analysis of the positive electrode active material particles after the spark plasma sintering revealed that their main composition had changed to cobalt oxide and cobalt. This was conceivably due to the reductive decomposition of lithium cobalt oxide caused by the reducing gases (CO) generated when the substrate 11b decomposed during the spark plasma sintering, as well as by the reducing effect of the graphite die.

### (Fifth Step)

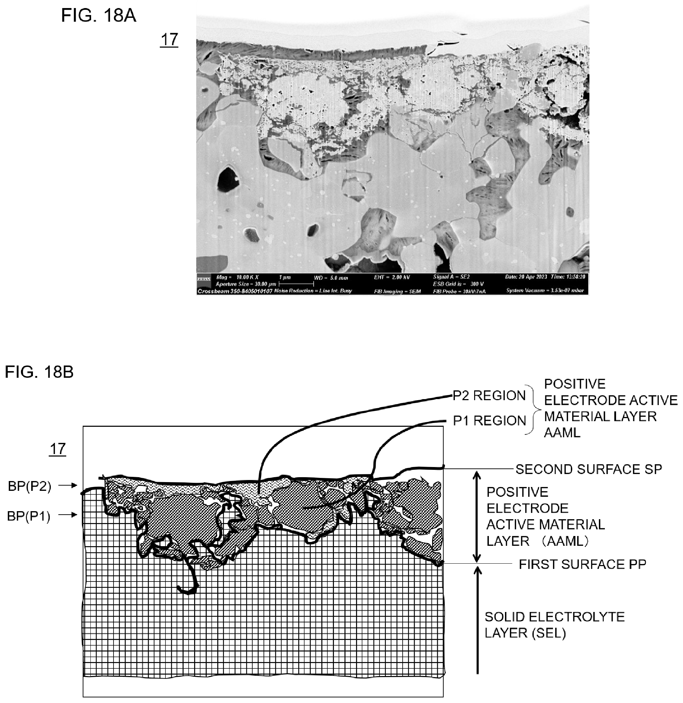

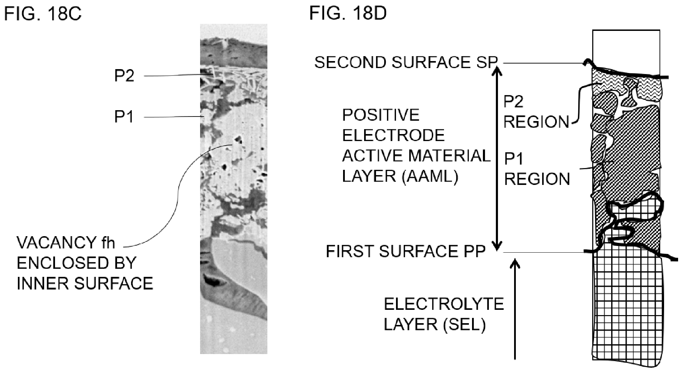

The composite was re-sintered to form an electrode composite. FIG. 18 shows sectional SEM images of the electrode composite 17 having been re-sintered in the fifth step (S105 in FIG. 1A).

The re-sintering was performed in a muffle furnace at a sintering temperature of 600°C, for a sintering time (holding time at 600°C) of 1 hour, and under atmospheric conditions. Starting from the bottom of the page in FIGs. 18A and 18C, the solid electrolyte layer (SEL) and the positive electrode active material layer (AAML) are laminated in this order with the first surface PP therebetween. FIG. 18C is a partial enlarged view of FIG. 18A. Each of FIGs. 18B and 18D schematically show the sectional structures in FIGs. 18A and 18C. In a similar manner, FIG. 18D corresponds to a partial enlarged view of FIG. 18B.

As is apparent from the sectional SEM images in FIGs. 18A and 18C and the schematic views in FIGs. 18B and 18D, the center of gravity position BP (P2) of the plurality of second active material particles P2 was positioned on a farther side from the first surface PP than the center of gravity position BP (P1) of the plurality of first active material particles P1.

In FIG. 18B, a region P1 indicates a region where the first active material particles are present and a region P2 indicates a region where the second active material particles are present. The region P1 was in contact with the solid electrolyte layer (SEL) via the first surface PP. In other words, the electrolyte layer and the first active material particles are in contact with each other via the first surface.

In addition, the first surface PP was in contact with the region P1 at a plurality of locations in the thickness direction. In other words, the first surface includes portions which overlap with the plurality of first active material particles in the thickness direction.

Note that photography was performed by removing the base in an upper portion of the positive electrode layer. The positive electrode active material particles after re-sintering differed significantly in shape from the particle image after spark plasma sintering (FIG. 17B) and had transformed into particles P11 which had a granular morphology and contained some vacancies and into particles P12 which had a larger aspect ratio and a smaller particle size compared to P11.

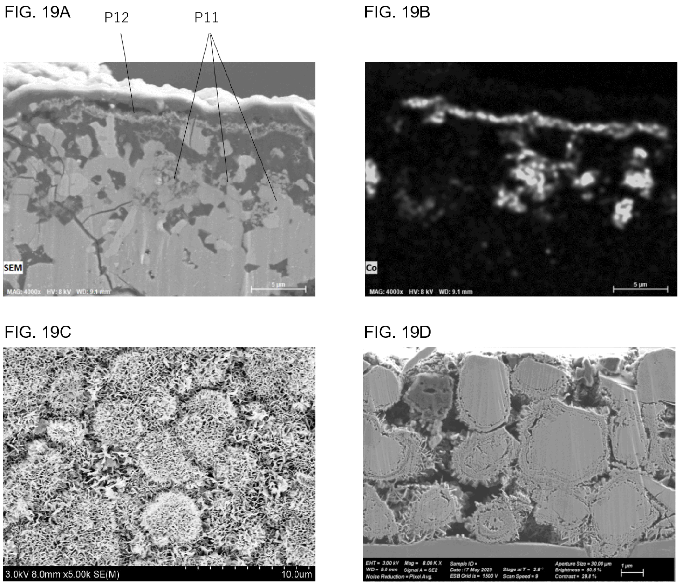

FIG. 19A is a sectional SEM image of the electrode composite 17 and FIG. 19B is an EDX image of Co contained in the positive electrode active material particles. The particles P12 were predominantly distributed along a planar direction of the side of the base (upper sides in FIGs. 19A and 19B) compared to the particles P11. In addition, X-ray analysis identified both particles P11 and P12 as oxides containing Li, Co, and O. Furthermore, EDX and EELS analyses using a TEM confirmed that the substance present around P11 and P12 is an oxide of boron (B) containing lithium (Li) and carbon (C).

This is conceivably achieved through the following mechanism. FIGs. 19C and 19D are an SEM image of a molded article fabricated by laminating the substrate 11b on a base on sintering the laminate in a muffle furnace, taken from above the molded article (a side where the particles are arranged) (FIG. 19C) and a sectional SEM image of the molded article (FIG. 19D). The positive electrode active material particles after the re-sintering have undergone a morphological change from the lithium cobalt oxide particles of the raw material and exhibit a porous structure with vacancies within the particles and projected portions extending in a plurality of directions on the particle surfaces (PTL 3). The particles P12 observed in FIGs. 18A to 18D and 26A are conceivably the projected portions described above, based on their shape and composition. In other words, conceivably, the projected portions that had formed on the surface of the lithium cobalt oxide particles had detached from the particles and became dispersed.

Hereinafter, a pore distribution will be described. The particle layer 12 on the substrate 11b has a characteristic in that, due to the settling step, P2 particles are located farther from the base 14 than P1 particles. As a result, conceivably, pores form around the P1 particles, particularly on the side facing the base 14, causing minute primary particles (such as cobalt oxide and cobalt) to be predominantly distributed on the side of the base 14 (current collector).

Conceivably, re-sintering after spark plasma sintering causes the primary particles predominantly distributed on the side of the current collector to oxidize with the surrounding lithium carbonate and transform into lithium cobalt oxide in the shape of projected portions.

An all-solid-state secondary battery was fabricated using the electrode composite 17 obtained according to the method described above and was evaluated. Hereinafter, methods for fabricating and evaluating an all-solid-state secondary battery will be described.

### <Method for Fabricating All-Solid-State Secondary Battery>

A positive electrode current collector (Al foil, thickness 20 µm), the electrode composite 17, a negative electrode material (indium foil, thickness 50 µm, manufactured by The Nilaco Corporation), and a negative electrode current collector (Cu foil, thickness 20 µm) were laminated in this order and packaged in an aluminum laminate film so that tab leads for lead-out electrodes having been welded to the current collectors in advance were positioned outside of the laminate. In the present example, the lamination was performed by peeling off the base 14 of the electrode composite 17 so that the positive electrode current collector and the positive electrode surface of the electrode composite 17 came into contact with each other. When the base 14 is not peeled off, lamination can be performed so that the positive electrode current collector and the base 14 come into contact with each other.

Subsequently, the package was molded into a laminate cell using a vacuum packaging machine (manufactured by TOSPACK) and applying pressure for 1 minute (196 MPa) using an isostatic pressing apparatus (manufactured by Nikkiso Co., Ltd.) to fabricate an all-solid-state secondary battery including an electrode composite, a negative electrode, and a current collector.

### <Method for Evaluating All-Solid-State Secondary Battery>

Power output characteristics and short circuits of the all-solid-state secondary battery were evaluated and determined according to the following criteria. Details are described below.

### (Evaluation of Power Output Characteristics of All-Solid-State Secondary Battery)

A total mass of active material particles in the positive electrode (M × number of layers × positive electrode area in cm²) was calculated based on the mass M of active material particles per unit area (g/cm²) of the substrate 11b on which the particle layer was formed. The mass M of the active material particles per unit area was obtained as follows.

The weight of the first substrate 11a was measured after being filled with the first particles P1 by the first filling apparatus 24a in the particle arranging apparatus 1. Next, the weight of the first substrate 11a was measured after transferring the first particles P1 to the second substrate 11b. A difference was calculated to determine the mass of the first particles P1 on the second substrate 11b. Subsequently, the mass M of the active material particles per unit area was calculated by dividing the mass of the first particles P1 with an area of the second substrate 11b (area of irregular region).

Another calculation method involves using ICP emission spectroscopic analysis. Three samples of the substrate 11b, each having formed thereon a particle layer of which the mass M of active material particles per unit area (g/cm²) has been determined in advance by the method described above or the like, are prepared. The substrates are dissolved using microwave-assisted acid digestion (ETHOS PRO), and the acid digestion solution is diluted with ultrapure water. Next, an ICP-AES analysis (CIROS CCD) is performed to quantify the Co element. A calibration curve is obtained for the mass M of active material particles per unit area (g/cm²) relative to the obtained element concentration. From the calibration curve, the mass M of active material particles per unit area (g/cm²) of the resin substrate on which the particle layer to be measured was formed can be determined.

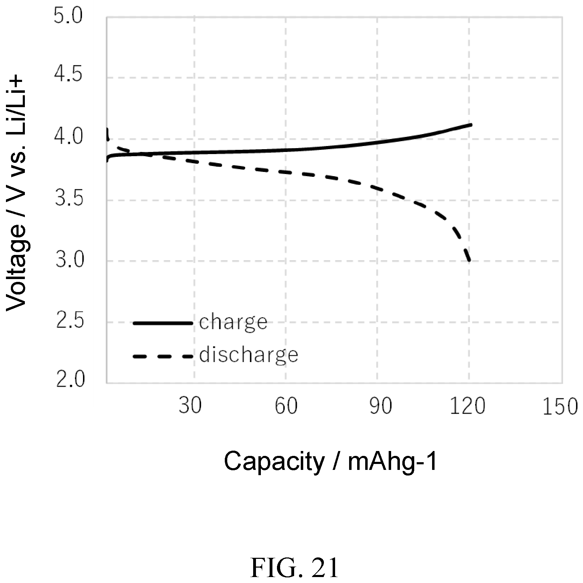

In the present disclosure, based on the total mass of the active material particles in the positive electrode, current values of current rates 0.1 C, 0.2 C, 0.3 C, ..., 0.8 C were determined, and charge-discharge measurements (constant-current charge/constant-current discharge) were performed starting at the lowest current rate. The charge-discharge measurements were performed at room temperature using a charging/discharging apparatus (manufactured by BioLogic). FIG. 21 represents an example of a measured charge-discharge curve. A vertical axis shows a battery cell voltage (V vs. Li/Li⁺) and a horizontal axis shows a battery cell capacity (mAh/g). The battery cell capacity is the capacity per mass of the active material particles of the positive electrode.

An effective capacity of lithium cobalt oxide was set at 120 mAh/g, and a cutoff voltage (relative to Li) was set at 4.2 V (charge) and 2.6 V (discharge). A capacity retention rate was calculated based on charge-discharge measurements conducted under the conditions described above. The capacity retention rate refers to a ratio of discharge capacity to charge capacity (discharge capacity/charge capacity × 100 (%)).

Charge-discharge measurements (three cycles) were performed starting at the lowest current rate (0.1 C). In the charge-discharge measurements, if the charge capacity was 120 mAh/g (without exceeding the cutoff voltage during charging) and the capacity retention rate (average over three cycles) was equal to or higher than 80%, the current rate was set to the next level and the charge-discharge measurements were repeated. If the charge capacity and capacity retention rate did not meet the above criteria, the charge-discharge measurements were terminated, and the prototype battery was evaluated using the criteria below, with the maximum current rate that met the criteria adopted as the power output of the battery. The evaluation results are shown in Table 1.
A: Battery power output is equal to or higher than 0.5 C
B: Battery power output is from 0.3 C to 0.4 C
C: Battery power output is equal to or lower than 0.2C

### (Evaluation of Short Circuit of Battery)

10 batteries with the same specifications were fabricated according to the method fabricating an all-solid-state secondary battery described above. Charge-discharge measurements and resistance measurements were performed under conditions including setting the effective capacity of lithium cobalt oxide at 120 mAh/g and the cutoff voltage (relative to Li) at 4.2 V (charge) and 2.6 V (discharge). The evaluation was categorized as follows: C for cases where charge-discharge measurements could not be performed on three or more batteries due to short circuits; B for cases where charge-discharge measurements could not be performed on one or more (but no more than two) batteries; and A for cases where no short circuits occurred in any of the batteries and charge-discharge measurements could be performed on all of the batteries. The evaluation results are shown in Table 1.

### <Method for Evaluating Particle Morphology and Predominantly Distribution of Particles>

After evaluating the all-solid-state secondary battery, the particle morphology and the uneven distribution of particles of the positive electrode active materials in the positive electrode were evaluated and determined according to the following criteria. Details are described below.

After evaluation, the all-solid-state secondary battery was disassembled and the electrode composite 17 was removed. Note that while the base, current collector, and the negative electrode are desirably removed so that only the laminate remains to facilitate cross-sectional processing to be described later, if the components cannot be removed, the processing and the evaluation to be described later may be performed on the laminate including the components that cannot be removed. In the present disclosure, the all-solid-state secondary battery was disassembled after evaluation and the electrode composite 17 was removed with the indium foil still attached.

### <Evaluation of Particle Morphology and Predominantly Distribution>

A method for evaluating the morphology and the uneven distribution of particles will be described.

The morphology and the uneven distribution of particle were evaluated by observing cross sections of the laminate using an SEM. Cross-sectional observations of the electrode composite 17 were performed using two-dimensional images obtained by etching a cross-section with a broad ion beam (BIB) of Ar and then scanning the cross-section with a scanning electron microscope (SEM). Hereinafter, the method of observing two-dimensional images described above will be referred to as BIB-SEM.

### <Method for Photographing BIB-SEM>

Cross-sectional images of the electrode composite 17 were photographed using BIB-SEM. Hereinafter, photographing conditions for BIB-SEM will be described.

The electrode composite 17 extracted from the all-solid-state secondary battery after the evaluation described above was cut using a wire saw (DWS3400; wire diameter 170 µm, diamond diameter 30 µm) so that the cross-section aligned with the lamination direction. The cross-section was processed using a broad ion beam of Ar (SM-09010 Cross Section Polisher, manufactured by JEOL Ltd.). The conditions for cross-sectional processing included setting voltage to 6 kV and current to 150 to 200 mA. Cross-sectional observation was performing by obtaining cross-sections in the lamination direction of the laminate as BIB-SEM images.

While cross-sectional photography was performed by BIB-SEM in the present disclosure, a fine ion beam (FIB) with changed ion particle intensity and beam diameter can also be used in place of the broad ion beam (BIB).

The cross-sectional portion was photographed under the following conditions using an electron microscope (ULTRA 55).
Observation condition: accelerating voltage 2 kV
Magnification: 20,000x

Next, elemental and compositional analyses of each particle in the laminate were performed by SEM-EDX (XFlash Detector 630M, manufactured by Bruker Corporation), and the positive electrode active material particles were identified.

A method for identifying the positive electrode active material particles will be described. The laminate was analyzed using X-ray diffraction (XRD) and the like to identify substances constituting the electrodes. Subsequently, specific elements contained in each of the positive electrode active material particles and the solid electrolyte particles were detected and identified using SEM-EDX according to the method described above. In the present disclosure, Co was detected and identified as the specific element contained in the positive electrode active material particles and Yb was detected and identified as the specific element contained in the solid electrolyte particles.

In addition to X-ray diffraction described above, the substances constituting the laminate can also be identified using electron energy-loss spectroscopy (EELS) in TEM. Furthermore, identification can also be performed using Raman spectroscopy or TOF-SIMS, and the substances comprising the laminate may be identified by combining the analytical methods described above.

The morphology of particles identified as the positive electrode active material particles was evaluated based on BIB-SEM images. According to the determination method described below, the particles identified as positive electrode active material particles were classified into two groups: particles P12, which have a minor axis equal to or less than 130 nm and an aspect ratio (major axis/minor axis) equal to or greater than 2; and particles P11, which have a minor axis greater than 130 nm and an aspect ratio (major axis/minor axis) less than 2. The particles P12 are particles with a higher average aspect ratio than the particles P11. In other words, the particles P12 are the second active material particles according to the present disclosure and the particles P11 are the first active material particles according to the present disclosure.

When the particles P12 and the particles P11 coexist in the laminate, the particle morphology was determined to be "○". When only one of the particles P12 and the particles P11 exist in the laminate, the particle morphology was determined to be "×". When active material particles of which surfaces included projected portions that are morphologically identical to those of the particles P12 were included in the observed positive electrode active material particles, the particle morphology was determined to be "△". The results are shown in Table 1.

In addition, according to the determination method described below, the uneven distribution of particles was determined to be "○" if a center of gravity position of the particles P12 was located on a farther side from the electrolyte layer than a center of gravity position of the particles P11. The results are shown in Table 1.

### (Comparative Example 1)

A secondary battery was fabricated according to the same manufacturing method as the Example with the exception of omitting the fifth step (S105 in FIG. 1A) in the method for manufacturing a laminate.

### (Comparative Example 2)

A positive electrode layer and a solid electrolyte layer were separately molded. For the positive electrode layer, a positive electrode precursor manufactured under the same conditions as the Example was sintered in a muffle furnace and molded (600°C, sintering time 1 hour, under atmospheric condition). For the solid electrolyte layer, a die was only filled with solid electrolyte particles according to the same method as the method for manufacturing a laminate of the Example, and spark plasma sintering and re-sintering were performed to mold the solid electrolyte layer. The positive electrode layer and the solid electrolyte layer were laminated and a secondary battery was manufactured according to the same manufacturing method as the Example.

### (Comparative Example 3)

In the method for manufacturing a laminate, a secondary battery was manufactured according to the same manufacturing method as the Example, with the exception of changing the material of the die and the punch used in the second step from graphite to cemented carbide and changing the sintering step from spark plasma sintering to sintering using a hot press (manufactured by Sansho Industry Co., Ltd.). In the sintering step, the sintering temperature in the hot press was set to 600°C, the sintering time was set to 1 hour, the pressure was set to 30 MPa, and no pressure was applied during the temperature rise from room temperature to 550°C and pressure application began only after the temperature reached 550°C.

Morphology and uneven distribution of particles and power output and occurrence of short circuits of the secondary battery were evaluated with respect to the Comparative Examples 1 to 3 according to the same method as Example 1. The results are shown in Table 1.

### [Table 1]

**Table 1**

| | Particle morphology | Predominantly distribution of particles | Battery power output | Battery short circuit |
|---|---|---|---|---|
| Example | ○ | ○ | A | A |
| Comparative Example 1 | × | × | C | C |
| Comparative Example 2 | Δ | × | B | B |
| Comparative Example 3 | Δ | × | B | C |

"Particle morphology" was determined as follows: "○" when the particles P12 and the particles P11 coexist in the laminate; " × " when only one of the particles P12 and the particles P11 exist in the laminate; and "△" when active material particles of which surfaces included projected portions that are morphologically identical to those of the particles P12 were included in the observed positive electrode active material particles.

"Predominantly distribution of particles" was determined by determining the center of gravity position of the particles P12 and the center of gravity position of the particles P11 according to the method described below as follows: "○" if the center of gravity position of the particles P12 was located on a farther side from the electrolyte layer or, in other words, in a vicinity of the current collector than the center of gravity position of the particles P11; and "×" if the above conditions are not satisfied.

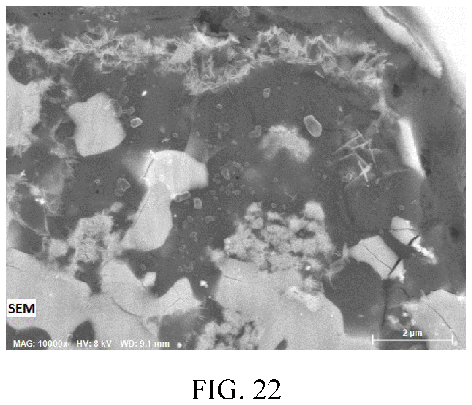

A method for determining particle morphology and the uneven distribution of particles will be described below. As an example, a detailed description will now be given using FIG. 22 (400 × 600 pixels) which represents an enlarged image of FIG. 19A (sectional SEM image of the electrode composite 17 according to the Example).

The center of gravity position of the particles P12 being located on a farther side from the electrolyte layer than the center of gravity position of the particles P11 means that the center of gravity position of the particles P12 is shifted toward the side of the current collector. In terms of FIG. 22, this means that the center of gravity position of the particles P12 is present on an upper side of the drawing relative to the center of gravity position of the particles P11.

The determination of the morphology and the uneven distribution of particles in the positive electrode active material layer was performed according to the following procedure.
(1) Identify a region where the positive electrode active material particles are present.
(2) Evaluate morphology of positive electrode active material particles in the region, and determine whether the positive electrode active material particles are the particles P11 or the particles P12. (3) Measure the center of gravity position of the particles P11 and the center of gravity position of the particles P12, and compare the center of gravity positions.

Note that in the following determination method, OpenCV was used for image processing, and analysis was performed using Python. As the analysis method, other methods may be used as long as similar analysis can be achieved.

### (1) Identify a Region where the Positive Electrode Active Material Particles Are Present

As a region where the positive electrode active material particles are present, elemental and compositional analyses of individual particles in cross-sections of the laminate were performed by SEM-EDX (XFlash Detector 630M, manufactured by Bruker Corporation), and a position where a specific element was present in the active material particles was identified as a region (positive electrode active material layer) where the positive electrode active material particles are present.

In the Example, since LiCoO₂ was used as the positive electrode active material particles, the active material particles were identified by detecting Co by SEM-EDX.

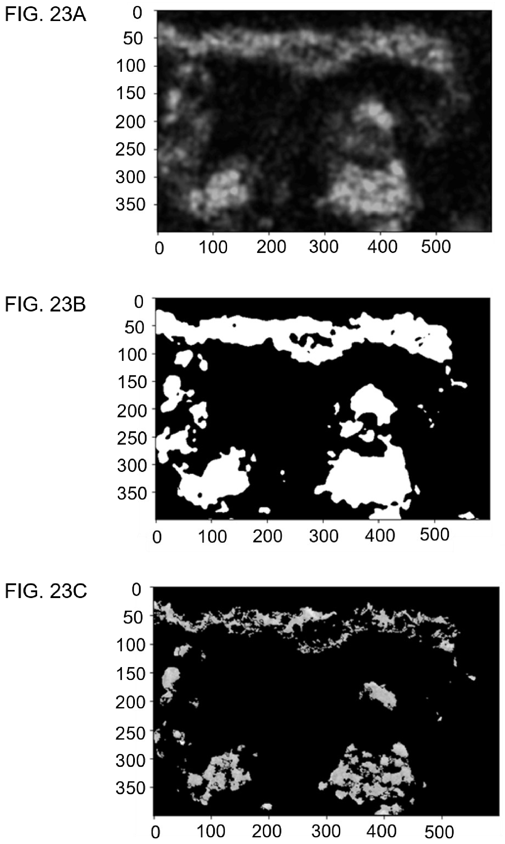

Specifically, FIG. 23A, which is an EDX image of a Co atom, was binarized using a lightness threshold of 55, and then dilated using a 3×3 kernel. FIG. 23B represents an image after the dilation. In the image after the dilation, a white portion is a region where Co is present and the region is identified as a region where positive electrode active material particles are present.

### (2) Evaluate Morphology of Positive Electrode Active Material Particles

The morphology of the positive electrode active material particles in the region was evaluated to determine whether the positive electrode active material particles are the particles P11 or the particles P12. To determine the particles P11 and P12, particles in the region identified by the method described in (1) were detected by boundary detection and the particles P11 and P12 were determined based on the shape of the detected particles.

A sectional SEM image of the electrode composite 17 was converted into grayscale and normalized so that the overall average lightness was 150 and the standard deviation was ±30. After obtaining an image with enhanced edges using sharpening filters ("-3/7, -3/7, -3/7", "-3/7, 1 + 6 × 3/7, 3/7", and "-3/7, -3/7, -3/7"), the image was binarized using a lightness threshold of 170. From the obtained image, only the region where the active material particles are present was cropped, using the region identified in (1) above as a mask.

Opening was performed using a 2×2 kernel on the cropped image to remove noise. Next, to apply the Watershed method for determining boundaries, the following method was used to determine portions that are definitely background, portions that are definitely foreground (in this case, active material particles), and portions where it is unclear which category they belong to.

After performing the opening described above on the image, white portions were subjected to dilation to definitively identify the black portions as the background. Next, distances between the foreground and the background were measured, and portions separated from the background by 10% or more were definitively identified as the foreground. In addition, a region between the foreground and the background were defined as boundary regions, and individual particles were detected by applying the Watershed method. FIG. 23C shows an example of an image representing each detected particle.

Each detected particle was approximated using a smallest rectangle that encloses its contour, and the minor and major axes of each particle were calculated. Particles of which the calculated minor axis was greater than 130 nm (7 pixels) and particles of which the aspect ratio of the major axis to the minor axis was smaller than 2 were determined to be P11 (first active material particles). In addition, particles of which the calculated minor axis was equal to or less than 130 nm (7 pixels) and particles of which the aspect ratio of the major axis to the minor axis was equal to or greater than 2 were determined to be P12 (second active material particles).

The aspect ratio of the major axis to the minor axis was calculated with respect to all of the detected particles, an average value of the aspect ratios of the particles determined as P11 and an average value of the aspect ratios of the particles determined as P12 were calculated and adopted as average aspect ratios. For example, 39 particles P11 and 324 particles P12 were detected from FIG. 23C. In addition, it was confirmed that the average aspect ratio of the detected particles P12 was higher than the average aspect ratio of the detected particles P11.

Furthermore, when the particles determined to be active material particles by the determination method described above include active material particles including projected portions on their outermost corner surface, the particle morphology was determined to be "△". In the active material particles including projected portions on their outermost corner surface, a length and an aspect ratio of the projected portions were analyzed based on the number of image pixels.

In Comparative Example 2, an analysis of 100 projected portions in three active material particles resulted in an average length of 400 nm and an aspect ratio of 40. In Comparative Example 3, an analysis of 100 projected portions in three active material particles resulted in an average length of 250 nm and an aspect ratio of 25.

### (3) Compare Center of Gravity Positions of Particles

To calculate the center of gravity position of the particles, all particles were assumed to have the same density and an average of coordinate positions of all pixels were calculated for each particle determined according to the method described above.

In the image obtained by detecting each particle according to the method described in (2) above, an end portion on a side in contact with the current collector in the region where the positive electrode active material particles are present was defined as 0, and a direction toward the side in contact with the electrolyte layer was defined as the Y-axis direction. A value obtained by dividing a sum of coordinates in the Y-axis direction of all pixels of the particles determined to be particles P11 by the number of all pixels occupied by the particles determined to be particles P11 was calculated as the center of gravity position of the particles P11. In addition, the center of gravity position of the particles P12 was also calculated according to the same method as the particles P11.

For example, in FIG. 23C, given that the positive electrode active material layer AAML with a reference point (Y = 351) on the side of the first surface PP and a reference point (Y = 41) on the side of the second surface SP had a thickness of 310 pixels, the center of gravity position of the particles P11 was at Y = 251, a relative distance from the first surface PP was (351-225)/(351-41) = 126/310, the center of gravity position of the particles P12 was at Y = 165, and a relative distance from the first surface PP was (351-165)/(351-41) = 186/310. In other words, the center of gravity position BP (P2) of the plurality of second active material particles P2 was positioned on a farther side from the first surface PP than the center of gravity position BP (P1 of the plurality of first active material particles P1.

In other words, the plurality of second active material particles P2 are predominantly distributed on the side of the second surface SP and the plurality of first active material particles P1 are predominantly distributed on the side of the first surface PP.

In addition, the following analysis was also performed to determine the regions where each particle is distributed.

Among the pixels identified in FIG. 23C as containing active material particles, a region spanning from an upper limit to a lower limit of the Y-axis coordinates was defined as a distribution region in the thickness direction of the active material, and positions where the respective particles were distributed were determined. The particle distribution was determined by calculating the center of gravity position of each particle and using the center of gravity position as the location of the particle. The positions of the second active material particles were determined according to the method described above to confirm the degree of uneven distribution. If 60% or more by number of all observed second active material particles were found to be contained within a third of the positive electrode active material layer on the side of the second surface, it was determined that the second active material particles were predominantly distributed on the side of the second surface.

In FIG. 23C, among the particles P12 (324) detected according to the method described above, the number of the particles P12 present in a region corresponding to an upper third of the image of the region where the active material is present was 210. In other words, 65% by number of the particles P12 were predominantly distributed in the upper third. In FIG. 23C, the upper side of the image is the second surface on the side in contact with the current collector. In other words, in FIG. 23C, 65% by number of the second active material particles were predominantly distributed on the side of the second surface.

Furthermore, based on the particle positions determined above, a degree of dispersion of the first active material particles and the second active material particles were confirmed. Between the one-third region including the side of the first surface of the positive electrode active material layer and the one-third region including the side of the second surface of the positive electrode active material layer, the degree of dispersion of each active material particle was compared based on a histogram of a distribution of centroid-to-centroid distances of each particle.

In addition, in FIG. 23C, among the particles P11 (39) detected according to the method described above, the number of the particles P11 present in a region corresponding to a lower third of the region where the active material is present was 24. In other words, 62% by number of the particles P11 were predominantly distributed in the lower third. In FIG. 23C, the lower side of the image is the first surface on the side in contact with the electrolyte layer. In other words, in FIG. 23C, 62% by number of the first active material particles were predominantly distributed on the side of the first surface.

In addition, in FIG. 23C, an average area per particle P12 detected using the method described above was 43 pixels while the average area per particle P11 was 101 pixels. A volume per particle of the first active material particles was 43 × 43/7 = 264 cubic pixels, while the volume per particle of the second active material particles that are isotropic particles was 101^(3/2) = 1015 cubic pixels. Since the present example secures a sufficient observation region, conceivably, the particle area (number of pixels) in the SEM image is roughly proportional to the actual volume of the particle. It was found that the second active material particles P2 have a smaller volume per particle than the first active material particles P1.

In the battery according to the present example, the positive electrode active material particles included particles P12 (second active material particles) of which the minor axis is equal to or less than 130 nm and of which the aspect ratio of the major axis to the minor axis was equal to or greater than 2, and other particles P11. In addition, the particles P12 were predominantly distributed on the side of the positive electrode current collector (side of base). These features conceivably improved battery power output and suppressed battery short circuits.

Why these features improve battery power output will be described.

It is generally known that increasing a contact area between active material particles and solid electrolyte particles within an electrode is key to improving battery performance. Conceivably, the positive electrode active material particles including projected portions on surfaces thereof improve battery power output (PTL 3) because the surface area of the active material particles increase and expand the contact area with the solid electrolyte particles.

On the other hand, in the present example, the projected portions formed on the surface of the positive electrode active material particles further detach from the positive electrode active material particles. Therefore, conceivably, the surface area of the positive electrode active material particles further increases and further improves battery power output. Preferably, at least a part of the projected portions are detached from the surface of the positive electrode active material particles and, more preferably, all of the projected portions are detached.

Furthermore, positive electrode active material particles with relatively high electronic conductivity such as the lithium cobalt oxide used in the Example can provide electronic conductivity without the need for a conductive additive. The uneven distribution of the particles P12 (second active material particles) with a small particle size and a high aspect ratio in the vicinity of the positive electrode current collector (base) conceivably facilitates transfer of electrons to the current collector. These effects conceivably improved the diffusion of lithium ions and electrons within the positive electrode, thereby increasing battery power output.

On the other hand, particles P12 (second active material particles) with a small particle size and a high aspect ratio tend to concentrate charge and are prone to causing short circuits. In particular, when the positive electrode layer and the solid electrolyte layer are molded in a single step, if the solid electrolyte layer is thin (for example, 100 µm or less), the presence of the particles P12 (second active material particles) on the side of the electrolyte layer makes it more likely to cause a short circuit. In the present example, battery short circuits are conceivably unlikely to occur because the particles P12 (the second active material particles) which could cause short circuits are predominantly distributed on the side of the positive electrode current collector (base).

The present disclosure is not limited by the embodiments, and can be variously changed and modified without departing from the spirit and the scope of the present disclosure. Therefore, in order to make the scope of the present disclosure public, the following claims are appended.

This application claims the benefit of Japanese Patent Application No. 2024-012253 filed on January 30, 2024, which is hereby incorporated by reference herein in its entirety.

## Claims

1. An electrode composite to be applied to a secondary battery, the electrode composite comprising:
a positive electrode active material layer and an electrolyte layer, wherein
the positive electrode active material layer has a first surface which is in contact with the electrolyte layer and a second surface which is located on an opposite side to the first surface and comprises a plurality of first active material particles and a plurality of second active material particles which have a higher average aspect ratio than the plurality of first active material particles, and a center of gravity position of the plurality of second active material particles is located on a farther side from the first surface than a center of gravity position of the plurality of first active material particles.

2. The electrode composite according to claim 1, wherein the plurality of second active material particles are predominantly distributed on a side of the second surface.

3. The electrode composite according to claim 1 or 2, wherein the plurality of first active material particles are predominantly distributed on a side of the first surface.

4. The electrode composite according to any one of claims 1 to 3, wherein
a minor axis of the first active material particle is greater than 130 nm, and
a minor axis of the second active material particle is 130 nm or less, and an aspect ratio of a major axis to the minor axis of the second active material particles is 2 or more.

5. The electrode composite according to any one of claims 1 to 4, wherein in a cross-sectional observation of the positive electrode active material layer by an SEM, the center of gravity position of the plurality of second active material particles is positioned on a farther side from the first surface than the center of gravity position of the plurality of first active material particles.

6. The electrode composite according to any one of claims 1 to 5, wherein the second surface includes a surface in contact with a current collector which exchanges electrons with the positive electrode active material layer.

7. The electrode composite according to claim 6, further comprising the current collector in contact with the second surface.

8. The electrode composite according to any one of claims 1 to 7, wherein the first active material particles and the second active material particles comprise positive electrode active material particles comprising Li, Co, and O.

9. The electrode composite according to any one of claims 1 to 8, wherein the first active material particles and the second active material particles comprise at least one compound, in which a portion of Li and Co in lithium cobalt oxide has been replaced by at least one element selected from the group consisting of Ni, Mn, Mg, Al, Fe, Si, C, and B, and lithium cobalt oxide.

10. The electrode composite according to any one of claims 1 to 9, wherein the first active material particles have inner surfaces inside the particles.

11. The electrode composite according to claim 10, wherein the inner surfaces constitute vacancies of the first active material particles.

12. The electrode composite according to any one of claims 1 to 11, wherein the second active material particles have a smaller volume per particle than the first active material particles.

13. The electrode composite according to any one of claims 1 to 12, wherein the first active material particles have projected portions on the particle surfaces.

14. The electrode composite according to any one of claims 1 to 13, wherein the second active material particles comprise flakes with a thickness smaller than an average particle diameter of the first active material particles and/or needles with a diameter smaller than the average particle diameter of the first active material particles.

15. The electrode composite according to any one of claims 1 to 14, wherein the second active material particles are separated from the first active material particles.

16. The electrode composite according to any one of claims 1 to 15, wherein the electrolyte layer and the first active material particles are in contact via the first surface.

17. The electrode composite according to any one of claims 1 to 16, wherein a dispersion of the first active material particles is greater than a dispersion of the second active material particles in a thickness direction of the positive electrode active material layer.

18. The electrode composite according to any one of claims 1 to 17, wherein the first surface includes a portion which overlaps with the plurality of first active material particles in the thickness direction.

19. The electrode composite according to any one of claims 1 to 18, comprising a negative electrode active material layer in contact with the electrolyte layer.

20. A secondary battery comprising: the electrode composite according to any one of claims 1 to 19; a negative electrode; and a current collector.

21. A secondary battery, comprising:
the electrode composite according to claim 19;
a first current collector in contact with the positive electrode active material layer; and
a second current collector in contact with the negative electrode active material layer.

22. A method for manufacturing an electrode composite to be applied to a secondary battery, the method comprising:
a lamination step of laminating a first material layer comprising active material particles and a second material layer comprising solid electrolyte particles and forming a laminate;
a pressure and voltage application step of applying positive pressure and an alternating voltage in a lamination direction of the laminate to form a composite; and
a sintering step of sintering the composite in an oxygen-containing atmosphere to form an electrode composite.

23. The method for manufacturing an electrode composite according to claim 22, wherein the lamination step includes a step of enclosing the laminate with a dielectric body.

24. The method for manufacturing an electrode composite according to claim 22 or 23, wherein the pressure and voltage application step includes a step of heating the laminate.

25. A method for manufacturing a secondary battery, the method comprising:
a step of manufacturing an electrode composite according to the manufacturing method according to any one of claims 22 to 24; and
a step of laminating the electrode composite, a negative electrode, and a current collector.
